# EUROPÄISCHE PATENTANMELDUNG

(11) **EP 3 079 185 A1**
(43) Veröffentlichungstag der Anmeldung: **12.10.2016**
(21) Anmeldenummer: 16164190.7
(22) Anmeldetag: 07.04.2016
(51) Int. Cl.: H01M 2/34, H02J 7/00, H01M 10/42, H01M 10/48

(54) **SICHERHEITSVORRICHTUNG FÜR EINEN WIEDERAUFLADBAREN ELEKTRISCHEN ENERGIESPEICHER**

(30) Priorität: 09.04.2015 DE 102015105426
(71) Anmelder: HOPPECKE Advanced Battery Technology GmbH, 08056 Zwickau (DE)
(72) Erfinder: Winkler, Norman, 08056 Zwickau (DE); Reinhold, Dipl.-Ing. Stefan, 08058 Zwickau (DE); Rupprecht, Dipl.-Ing. Klaus, 34266 Niesetal (DE)
(74) Vertreter: Bals, Rüdiger

(57) **Zusammenfassung**

Die Erfindung betrifft eine Sicherheitsvorrichtung (210) für einen wiederaufladbaren elektrischen Energiespeicher (5), insbesondere eine Lithium-Ionen-Batterie (5), zur Unterbindung eines elektrischen Stromflusses des Energiespeichers (5) in Abhängigkeit von zumindest einem Parameter des Energiespeichers (5), aufweisend zumindest eine Überwachungsvorrichtung (230) zur Überwachung des zumindest einen Parameters und zumindest eine Halbleiterschalteinheit (215) zur primären reversiblen Unterbindung des Stromflusses in Abhängigkeit von der Überwachung, und zumindest eine Sicherheitsschalteinheit (220) zur sekundären redundanten Unterbindung des Stromflusses in Abhängigkeit von der Überwachung, wobei die Sicherheitsschalteinheit (220) irreversibel zur Unterbindung des Stromflusses schaltbar ist.

## Beschreibung

Die vorliegende Erfindung betrifft eine Sicherheitsvorrichtung für einen Energiespeicher, insbesondere eine Lithium-Ionen-Batterie. Ferner bezieht sich die Erfindung auf ein Verfahren zur Unterbindung eines elektrischen Stromflusses sowie auf ein Batteriesystem mit einem wiederaufladbaren Energiespeicher.

Es ist aus dem Stand der Technik bekannt, dass Batteriesysteme mit einem Energiespeicher, insbesondere einer wiederaufladbaren Lithium-Ionen-Batterie, hinsichtlich verschiedener Parameter wie (Zell-) Spannung, (Zell-) Temperatur und/oder (Zell-) Strom überwacht werden. Hierzu wird bspw. ein Batteriemanagementsystem des Batteriesystems eingesetzt. Dies ermöglicht, beim Eintreten eines kritischen Zustands des Batteriesystems bzw. des Energiespeichers eine Abschaltung, d. h. eine Unterbindung des Stromflusses bzw. Unterbrechung des Stromkreises des Energiespeichers zu bewirken. Auf diese Weise wird eine Zellschädigung oder eine sonstige Beschädigung des Batteriesystems vermieden. Aufgrund der hohen Sicherheitsrelevanz werden dabei besondere Anforderungen an die Sicherheitsvorrichtung mit dem Abschaltmechanismus gestellt, um einen sicheren Betrieb des Batteriesystems zu gewährleisten. So sollte die Abschaltung redundant und zuverlässig, z. B. durch den Einsatz mehrerer Relais erfolgen.

Als Nachteil hat sich dabei herausgestellt, dass die Sicherheitsvorrichtung mit dem Abschaltmechanismus, insbesondere bei dem Einsatz von Relais, stets eine Energieaufnahme benötigt und/oder einen hohen Energieverbrauch aufweist. Der Energieverbrauch lässt sich bspw. durch den Einsatz von Halbleiterschaltern mit niedrigerem Ruhestromverbrauch verringern, wobei hier allerdings weitere Anforderungen nicht mehr erfüllt sind. So ist ggf. die notwendige Zuverlässigkeit (bspw. durch eine galvanische Trennung des Stromkreises) nicht gegeben. Bekannte Lösungen für Sicherheitsvorrichtungen, welche z. B. den Stromverbrauch reduzieren und/oder die Zuverlässigkeit erhöhen, sind dabei oft sehr kostenaufwändig und/oder kompliziert in der Herstellung und im Betrieb.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine Sicherheitsvorrichtung bereitzustellen, welche einen zuverlässigeren und/oder kostengünstigeren Abschaltmechanismus zur Unterbindung und/oder Unterbrechung eines elektrischen Stromflusses des Energiespeichers ermöglicht, wobei vorzugsweise gleichzeitig der Energieverbrauch reduziert wird.

Die voranstehende Aufgabe wird gelöst durch eine Sicherheitsvorrichtung mit den Merkmalen des Anspruchs 1, ein Verfahren mit den Merkmalen des Anspruchs 10 sowie durch ein Batteriesystem mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Sicherheitsvorrichtung beschrieben sind, selbstverständlich auch im Zusammenhang mit dem erfindungsgemäßen Verfahren sowie dem erfindungsgemäßen Batteriesystem, und jeweils umgekehrt, so dass bezüglich der Offenbarung zu den einzelnen Erfindungsaspekten stets wechselseitig Bezug genommen wird bzw. werden kann.

Auch unter Schutz gestellt ist ferner ein Sicherheitssystem mit der erfindungsgemäßen Sicherheitsvorrichtung, ein Batteriemanagementsystem mit der erfindungsgemäßen Sicherheitsvorrichtung, ein Photovoltaiksystem mit der erfindungsgemäßen Sicherheitsvorrichtung und/oder dem erfindungsgemäßen Batteriesystem, und/oder eine Schaltanordnung mit der erfindungsgemäßen Sicherheitsvorrichtung und/oder dem erfindungsgemäßen Batteriemanagementsystem.

Die Aufgabe wird insbesondere gelöst durch eine Sicherheitsvorrichtung für einen wiederaufladbaren elektrischen Energiespeicher, insbesondere einer Lithium-Ionen-Batterie und/oder einen Lithium-Ionen-Akkumulator, zur Unterbindung und/oder Unterbrechung eines elektrischen Stromflusses des Energiespeichers in Abhängigkeit von zumindest einem Parameter des Energiespeichers, aufweisend zumindest eine Überwachungsvorrichtung zur Überwachung des zumindest einen Parameters und zumindest eine Halbleiterschalteinheit zur primären reversiblen Unterbindung des Stromflusses in Abhängigkeit von der Überwachung, und zumindest eine Sicherheitsschalteinheit zur sekundären redundanten Unterbindung des Stromflusses in Abhängigkeit von der Überwachung. Hierbei ist vorgesehen, dass die Sicherheitsschalteinheit, insbesondere ausschließlich, irreversibel zur Unterbindung des Stromflusses schaltbar ist. Dabei erfolgt die Unterbindung des Stromflusses insbesondere durch eine vollständige Unterbrechung des Stromkreises (des Energiespeichers), derart, dass der Stromfluss vollständig in beide Richtungen unterbrochen wird und/oder eine galvanische Trennung des Stromkreises durch die Sicherheitsschalteinheit erfolgt. Hierdurch wird der Vorteil erzielt, dass eine redundante und zuverlässige Unterbindung des Stromflusses erfolgt. Gleichzeitig ist die redundante Unterbindung des Stromflusses besonders energiesparend, da sie vorzugsweise irreversibel erfolgt. Es ist somit nur ein kurzzeitiger und/oder geringer Energiestoß notwendig, um die Sicherheitsschalteinheit zu aktivieren (d. h. zu schalten) und hierdurch den Stromfluss zu unterbinden und insbesondere den Stromkreis vollständig und/oder irreversibel und/oder galvanisch zu trennen. Dabei wird bevorzugt kein Ruhestrom und/oder (elektrischer) Energieaufwand benötigt, um die Sicherheitsschalteinheit im aktivierten, offenen Schaltzustand (d. h. wenn der Stromfluss durch die Sicherheitsschalteinheit unterbunden und/oder der Stromkreis durch die Sicherheitsschalteinheit geöffnet und insbesondere galvanisch unterbrochen ist) zu halten. Mit anderen Worten verbleibt die Sicherheitsschalteinheit nach der Aktivierung insbesondere ohne oder im Wesentlichen ohne (elektrische) Energieaufnahme (d. h. elektrische Strom- und/oder Spannungsversorgung) im aktivierten Schaltzustand. Vorzugsweise ist auch keinerlei mechanische oder sonstige Energieaufnahme notwendig, um im Schaltzustand zu verharren. Dagegen ist es denkbar, dass die Sicherheitsschalteinheit im deaktivierten, geschlossenen Schaltzustand (d. h. wenn der Stromfluss durch die Sicherheitsschalteinheit zugelassen wird bzw. der Stromkreis durch die Sicherheitsschalteinheit geschlossen ist) eine stetige Energiezufuhr (Ruhestrom) benötigt oder alternativ ohne Energieaufnahme auskommt. So kann durch die Sicherheitsschalteinheit während des Normalbetriebs (d. h. wenn keine sekundären Abschaltbedingungen, also ein kritischer Zustand vorliegt) auch keine Leistungsaufnahme oder nahezu keine Leistungsaufnahme erfolgen. Mit anderen Worten liegt die Energieaufnahme (Leistungsaufnahme) der Sicherheitsschalteinheit im Normalbetrieb insbesondere unterhalb der Energieaufnahme (Leistungsaufnahme) des Halbleiterschalters im Normalbetrieb. Normalbetrieb bezieht sich hierbei auf den deaktivierten Zustand (geschlossener Stromkreis).

Vorzugsweise benötigt die Halbleiterschalteinheit, im Unterschied zu Sicherheitsschalteinheit, sowohl im aktivierten, offenen Schaltzustand (wenn sie den Stromfluss unterbindet bzw. den Stromkreis öffnet) als auch im deaktivierten, geschlossenen Schaltzustand (wenn sie den Stromfluss zulässt bzw. den Stromkreis schließt) eine Energieaufnahme, insbesondere eine elektrische Strom- und/oder Spannungsversorgung. Die Sicherheitsschalteinheit zeichnet sich insbesondere dadurch aus, dass eine form-und/oder stoffschlüssige Verbindung der Kontakte zur Leitung des Stromes des Stromkreises vorgesehen ist. Die primäre reversible Unterbindung durch die Halbleiterschalteinheit erfolgt insbesondere beim Eintreten eines kritischen Zustands bzw. in Abhängigkeit von der Überwachung vorrangig zu der sekundären redundanten und ggf. irreversiblen Unterbindung des Stromflusses durch die Sicherheitsschalteinheit. Insbesondere erfolgt die Aktivierung der Halbleiterschalteinheit und/oder der Sicherheitsschalteinheit automatisch und/oder elektronisch und/oder elektrisch und/oder angesteuert in Abhängigkeit von der Überwachung, d. h. in Abhängigkeit von dem zumindest einem Parameter. Dabei kann vorzugsweise vorgesehen sein, dass die Halbleiterschalteinheit und die Sicherheitsschalteinheit in Abhängigkeit von der Überwachung von denselben Parametern, z. B. Spannung und Temperatur, angesteuert und/oder aktiviert werden. Weiter ist es auch denkbar, dass die Halbleiterschalteinheit (z. B. neben Spannung und Temperatur) noch in Abhängigkeit (von der Überwachung) von weiteren Parametern, wie Strom und/oder Kapazität, angesteuert und/oder aktiviert wird, wohingegen die Sicherheitsschalteinheit nur in Abhängigkeit von einigen dieser Parameter, z. B. Spannung und Temperatur, angesteuert und/oder aktiviert wird.

Die Überwachung ist dabei insbesondere eine Parameterüberwachung, d. h. bspw. eine Spannung- und/oder Temperaturüberwachung, wobei die Parameter z. B. Spannung und/oder Temperatur und/oder Strom und/oder Kapazität des Energiespeichers und/oder einzelner Zellen des Energiespeichers sein können. Die Überwachung ermöglicht es dabei, zumindest einen kritischen Zustand des Energiespeichers zu detektieren. Die Überwachung von insbesondere vorgegebenen Parametern, d. h. insbesondere von Eigenschaften und/oder Messgrößen und/oder Zuständen des Energiespeichers und/oder Batteriesystems, erfolgt dabei vorzugsweise zentral durch eine Überwachungseinheit der Überwachungsvorrichtung und/oder dezentral durch unabhängige Überwachungseinheiten der Überwachungsvorrichtung, wobei die Überwachungsvorrichtung z. B. auch als Überwachungssystem mit z. B. mehreren voneinander abhängigen und/oder unabhängigen Überwachungseinheiten ausgebildet sein kann. Eine unabhängige Überwachungseinheit ermöglicht dabei vorzugsweise die Überwachung und/oder Erfassung von Parametern, ohne vom Betrieb (z. B. der Stromversorgung und/oder Auswertung) weiterer Überwachungseinheiten abhängig zu sein, und ist damit autonom bzw. autark und/oder baulich getrennt von anderen Überwachungseinheiten ausgebildet. Es ist dabei denkbar, dass die Halbleiterschalteinheit und die Sicherheitsschalteinheit in Abhängigkeit von denselben Parametern, d. h. insbesondere von den gleichen Messgrößen aktiviert und/oder angesteuert werden, wobei die Parameter jeweils von unterschiedlichen unabhängigen Überwachungseinheiten erfasst werden. Auf diese Weise können die Parameter für die Halbleiterschalteinheit z. B. auf anderer Weise und/oder an anderen Orten und/oder mit einem unterschiedlichen Schwellenwert als die Parameter für die Sicherheitsschalteinheit überwacht werden und/oder zur Aktivierung dienen.

Der Ausdruck "irreversibel" bzw. "irreversibel schaltbar" bezieht sich im Rahmen der Erfindung insbesondere darauf, dass nur ein impulsartiger Initiierungsstrom bzw. Energiestoß notwendig ist, um die Sicherheitsschalteinheit von einem geschlossenen in einen geöffneten (aktivierten) Schaltzustand zu schalten, wobei nach dem Wegfall der Energieversorgung (des Initiierungsstroms) die Sicherheitsschalteinheit stabil im geöffneten, aktivierten Schaltzustand verbleibt. Dies hat den Vorteil, dass nur ein geringer Energieaufwand notwendig ist, um die Sicherheitsschalteinheit zu schalten. Dabei ist auch nach dem Wegfall der Energieversorgung gewährleistet, dass der Stromkreis unterbrochen und/oder der Stromfluss unterbunden ist. Der Ausdruck "irreversibel" bezieht sich damit insbesondere auch auf einen elektrischen bzw. elektrisch angesteuerten Schalter mit stabilem Schaltzustand. Somit kann die Sicherheitsschalteinheit bspw. als pyrotechnischer Schalter und/oder als bistabiles Relais ausgebildet sein. Entsprechend kann die Sicherheitsschalteinheit ggf. nur für ein einmaliges Schalten ausgebildet sein, sodass ein erneutes Schließen des Stromkreises durch die Sicherheitsschalteinheit verhindert ist (wohingegen dies bei einem "reversiblen" Schalten möglich ist). Dabei wird die Sicherheitsschalteinheit im Gegensatz zu einer normalen Schmelzsicherung bzw. Überstromschutzeinrichtung insbesondere nicht (nur) durch einen Überstrom, sondern in Abhängigkeit von zumindest einigen der Parameter angesteuert, in Abhängigkeit derer auch die Halbleiterschalteinheit angesteuert wird, wie Spannung und/oder Temperatur.

Unter einem elektrischen Energiespeicher wird insbesondere eine Batterie, d. h. vorzugsweise ein wiederaufladbarer insbesondere elektrochemischer Energiespeicher und/oder eine Sekundärbatterie verstanden. Der Energiespeicher kann somit mehrfach geladen und entladen werden, wobei bspw. die chemischen Reaktionen zur Energieerzeugung reversibel verlaufen. Dabei kann der Energiespeicher sowohl zur Speicherung von elektrischer Energie als auch als Energiequelle in einem Stromkreis mit einer externen Komponente, wie einer Last und/oder einem Verbraucher und/oder einem Wechselrichter dienen. Über diesen Stromkreis fließt dann der Lade- und/oder Entladestrom und/oder Batteriestrom (Verbraucherstrom) zum Betrieb der Komponente und/oder zum Aufladen des Energiespeichers. Die Komponente kann dabei bspw. eine aktive Komponente und/oder ein Wechselrichter z. B. eines Photovoltaiksystems sein. Dabei kann z. B. durch und/oder über die Komponente Energie, insbesondere der Ladestrom, zum Batteriesystem zur Aufladung des Energiespeichers fließen. Hierdurch ist es möglich, dass der Energiespeicher z. B. Solarstrom zwischenspeichert. Weiter ist es denkbar, dass der Energiespeicher an und/oder über die Komponente Energie, d. h. insbesondere der Entladestrom, zum Betrieb der Komponente oder weiterer Verbraucher oder zur Einspeisung in das Netz ausgibt. Der Lade- und/oder Entladestrom, d. h. insbesondere der Batteriestrom, fließt dabei durch die Leitungen des Stromkreises des Energiespeichers.

Der Stromkreis, insbesondere Hauptstromkreis und/oder Verbraucherstromkreis, d. h. die elektrische Verbindung zwischen dem Energiespeicher und der Komponente, kann beispielsweise über Verbindungskontakte hergestellt werden, welche insbesondere als Endableitung ausgebildet oder mit solchen verbunden sind. Die Verbindungskontakte sind beispielsweise Metallkontakte, welche eine Beschichtung (z. B. mit Zinn und/oder Nickel und/oder Gold) zur Verbesserung der Leitfähigkeit aufweisen.

Weiter ist es auch denkbar, dass der Energiespeicher für den Betrieb von Fahrzeugen und/oder Flurförderfahrzeugen und/oder Elektrofahrzeugen und/oder Elektromotoren, insbesondere als Traktionsbatterie ausgebildet ist. Auch der Betrieb des Energiespeichers an einem Wechselrichter, insbesondere Solarwechselrichter, beispielsweise in einem Photovoltaiksystem kann vorgesehen sein. Hier sind insbesondere Lithiumbatterien aufgrund ihrer hohen Leistungsdichte besonders geeignet. Eine weitere mögliche Anwendung des Energiespeichers ist z. B. der Einsatz als unterbrechungsfreie Stromversorgung.

Der Energiespeicher ist und/oder umfasst bevorzugt wenigstens eine Batterie, wobei unter Batterie im Rahmen der Erfindung insbesondere eine Sekundärbatterie bzw. ein Akkumulator verstanden wird. Der Energiespeicher kann dabei auch eine Zusammenschaltung mehrerer Batterien aufweisen. Unter Batterie wird dabei insbesondere eine Zusammenschaltung mehrerer galvanische Zellen (insbesondere Batteriezellen) verstanden, wobei die Zellen den Batteriestrom durch eine chemische Reaktion erzeugen. Die einzelnen Zellen werden bevorzugt zusammengefasst, beispielsweise in einer Parallelschaltung und/oder in einer seriellen Schaltung elektrisch miteinander verbunden, sodass auf diese Weise ein Zellpaket entsteht. Weiter weist der Energiespeicher ggf. ein Elektrolyt auf, welches z. B. auf Polymerbasis vorliegt. Der Energiespeicher ist insbesondere eine Lithiumbatterie, vorzugsweise Lithium-Ionen-Batterie (Lithium-Ionen-Akkumulator) und/oder eine Lithium-Polymer-Batterie und/oder eine Lithium-Cobaltdioxid-Batterie und/oder eine Lithium-Titanat-Batterie und/oder eine Lithium-Luft-Batterie und/oder eine Lithium-Mangandioxid-Batterie und/oder eine Lithium-Eisenphosphat-Batterie und/oder eine Zinn-Schwefel-Lithium-Ionen-Batterie und/oder dergleichen. Die Lithiumbatterie zeichnet sich durch einen sehr geringen Innenwiderstand und durch hohe Leistungsfähigkeit auch bei geringeren Kapazitäten aus. Sie lässt dabei eine nahezu vollständige Entladung zu und weist eine hohe Energie- und Leistungsdichte auf.

Ein Batteriesystem umfasst zumindest eine oder mehrere Zellen und/oder ein oder mehrere Zellpakete. Bevorzugt weist das Batteriesystem zumindest ein Zellpaket mit mindestens 8 Zellen und/oder maximal 16 Zellen und/oder maximal 24 Zellen auf. Durch eine Zusammenschaltung der Zellen ist eine besonders einfache und kostengünstige Skalierung des Batteriesystems möglich. Das Batteriesystem, insbesondere als wiederaufladbares Batteriesystem, weist vorzugsweise zumindest einen wiederaufladbaren Energiespeicher auf. Bei einem Lithium-Ionen-Batteriesystem ist dabei zumindest eine wiederaufladbare Lithiumbatterie als Energiespeicher vorgesehen. Das Batteriesystem umfasst ferner Kontakte zur Verbindung mit der externen Komponente, z. B. einen ersten Verbindungskontakt am Minuszweig und einen zweiten Verbindungskontakt am Pluszweig des Energiespeichers. Die Verbindungskontakte bilden somit vorzugsweise die Klemmen des als Energiequelle eingesetzten Energiespeichers, wobei im nicht angeschlossenen Zustand (offener Stromkreis) an den Verbindungskontakten die Leerlaufspannung anliegt. Auch ist beispielsweise ein Hauptschalter zum manuellen Schließen und/oder Unterbrechen des Stromkreises vorgesehen, um die elektrische Energieversorgung bzw. den elektrischen Energieaustausch mit der Komponente herzustellen oder zu unterbrechen. Der Hauptschalter dient also vorzugsweise dazu, den Batteriestrom vollständig zu unterbinden. Die maximale Ausgangsspannung und/oder Leerlaufspannung und/oder Nennspannung des Batteriesystems beträgt z. B. maximal 12 V und/oder 26 V und/oder 50 V. Weiter liegt die Nennspannung der einzelnen Zellen im Bereich von 2 bis 5 V, insbesondere 2,9 bis 3,7 V.

Das Batteriesystem, insbesondere Lithium-Batterie-System, wird vorzugsweise mit aktiven Komponenten verwendet. Als Komponenten werden beispielsweise Motorsteuergeräte für Traktionsanwendungen (d. h. Industrieanwendungen, Kleintraktion und Flurförderfahrzeuge und dergleichen), Um- und/oder Wechselrichter zusammen mit dem Batteriesystem genutzt. Die Komponente ist dabei wiederum typischerweise mit weiteren Verbrauchern verbunden, wie mit einem Solarpanel, einem Motor oder einem Anschlussnetz. Das Batteriesystem ermöglicht dabei beispielsweise die Zwischenspeicherung des Solarstroms und somit einen besonders energieeffizienten Betrieb einer Photovoltaikanlage.

Die Stromversorgung der Komponente und/oder der elektrische Energieaustausch zwischen der Komponente und dem Batteriesystem (d. h. insbesondere mit den einzelnen Batterien und/oder Zellen und/oder Energiespeichern des Batteriesystems) erfolgt vorzugsweise durch eine Zusammenschaltung der Komponente mit dem Batteriesystem in dem Stromkreis des Energiespeichers. Die Komponente wird hierzu z. B. an den Verbindungskontakten elektrisch mit dem Batteriesystem verbunden und ggf. zumindest ein Schalter wie ein Hauptschalter des Batteriesystems geschlossen, derart, dass der Stromkreis ebenfalls geschlossen wird, und ein Stromfluss (des Batteriestroms, d. h. beispielsweise des Lade-und/oder Entladestroms) möglich ist. Hierdurch wird ein sicherer Betrieb gewährleistet.

Als Komponente können z. B. Stromrichter, wie ein Gleichspannungswandler, ein Wechselrichter und insbesondere ein Solarwechselrichter eingesetzt werden. Unter Wechselrichter wird insbesondere ein elektrisches Gerät verstanden, welches Gleichspannung in Wechselspannung umrichtet. Zur Steigerung des Wirkungsgrades wird hier bevorzugt ein Wechselrichter mit Halbleitern, insbesondere aus Siliziumkarbid genutzt, besonders bevorzugt getaktet, um einen zuverlässigen Betrieb mit geringen Verschleiß zu ermöglichen. Der Wechselrichter kann als ein elektrisches Gerät mit Transformatoren zur galvanischen Trennung oder transformatorlos und daher mit hohem Wirkungsgrad ausgestaltet sein. Der Transformator ermöglicht dabei eine galvanische Trennung zwischen dem Gleichstromsystem (dem Batteriesystem) und dem Wechselstromsystem. Vorzugsweise wird ferner ein selbstgeführter Wechselrichter eingesetzt, um durch eine eigene Taktquelle unabhängig vom Netz betrieben zu werden, wobei ggf. am Wechselrichter zumindest ein Wechselstromverbraucher betrieben wird. Insbesondere erfolgt durch den Wechselrichter eine Anpassung des Batteriestroms (des Batteriesystems) an Netzbedingungen, d. h. an z. B. 230 V Wechselspannung und an eine Frequenz von z. B. 50 Hz. Optional kann der Wechselrichter auch einen MPP-Regler (Maximum Power Point Tracking) für die Anpassung des Wechselrichters an den Punkt der maximalen Leistung aufweisen, vorzugsweise zum Betrieb mit einer Photovoltaik-Anlage eines Photovoltaiksystems zum Betreiben der Solarzellen im Leistungsmaximum. Hierzu weist der Wechselrichter vorzugsweise aktive und/oder integrierte Bauelemente, wie z. B. Mikroprozessoren auf. Das Batteriesystem ist hierbei vorzugsweise dazu geeignet und ausgelegt, Solarstrom des Photovoltaiksystems (d. h. der Solarzellen) zwischenzuspeichern. Das Batteriesystem kann beispielsweise bis zu 2,5 kWh, 5 kWh und/oder bis zu 10 kWh speichern. Somit ist ein besonders effizienter Betrieb der Photovoltaikanlage möglich.

Die Komponente kann ferner auch ein Kommunikationssystem aufweisen, z. B. ein Bussystem (wie einen CAN- und/oder SPI-Bus), welches zur Datenkommunikation mit externen Geräten und/oder einem Batteriemanagementsystem des Batteriesystems genutzt wird. CAN steht hierbei für "Controller area network" und SPI für "Serial Peripheral Interface"-Bus. Dies ermöglicht eine einfache Überwachung und Steuerung der Komponente.

Aufgrund ihres Aufbaus und der aktiven Steuerung weisen solche Komponenten eine Eingangskapazität auf. Bei einem Anschluss des Batteriesystems mit der Komponente muss die Eingangskapazität vorgeladen werden, um die Einschaltströme zu begrenzen und einen sichereren Betrieb zu gewährleisten. Bevorzugt kommt hierzu eine Ladevorrichtung des Batteriesystems zum Einsatz. Die Vorladung durch die Ladevorrichtung erfolgt dabei vorteilhafterweise bereits bevor die vollständige Energieversorgung durch das Batteriesystem hergestellt wird (z. B. durch Betätigung eines Hauptschalters des Batteriesystems) durch einen möglichst konstanten und hohen Vorladestrom. Zur Vorladung wird beispielsweise durch einen Benutzer zunächst ein Vorladeschalter (Precharge-Schalter) zum Schließen eines Vorladestromkreises aktiviert, bevor der Hauptschalter aktiviert wird. Hier kann auch eine Kontrolleinheit vorgesehen sein, welche z. B. erst nach durchgeführter Vorladung eine Betätigung des Hauptschalters und/oder ein Schließen des Stromkreises (zum Betrieb der Komponente mit der Batterie) erlaubt, um so die Sicherheit noch weiter zu erhöhen. Hierbei unterscheiden sich somit der Vorladestromkreis zur Vorladung von dem Stromkreis des Energiespeichers zum eigentlichen Betrieb der Komponente an dem Energiespeicher mit dem Batteriestrom (d. h. insbesondere der Lade- und/oder Entladestrom) dadurch, dass im Vorladestromkreis ausschließlich der (begrenzte) Vorladestrom fließt. Auch ist es denkbar, dass bei dem Stromkreis (d. h. dem Hauptstromkreis) immer ein nur durch den Energiespeicher selbst begrenzter Batteriestrom fließen kann, wobei der Vorladestrom des Vorladestromkreises zusätzlich begrenzt wird.

Überspannung, Überstrom, Kurzschlüsse, Überladen, Hitze und/oder mechanische Einwirkungen können kritische Zustände hervorrufen, welche zu einer Zerstörung des Energiespeichers führen. Bevorzugt ist daher das Batteriesystem aus Sicherheitsgründen mit einem Batteriemanagementsystem ausgestattet. Das Batteriemanagementsystem weist insbesondere eine Überwachungs-, Steuerungs-, und/oder Kommunikationsfunktionalität auf. Es ermöglicht so beispielsweise eine Überwachung von Parametern des Energiespeichers (d. h. auch des Batteriesystems und/oder der Umgebung des Batteriesystems), insbesondere eine Messwerterfassung am Batteriesystem bzw. an dem Stromkreis des Energiespeichers. Somit können Messgrößen wie (Batterie- und/oder Zell-) Strom, (Batterie- und/oder Zell-) Spannung, (Batterie- und/oder Zell-) Impedanz, Temperatur (z. B. der Zellen und/oder der Umgebung), Kapazität der Energiespeicherzellen und/oder des Energiespeichers und/oder Beschleunigungen erfasst und überwacht werden. Auch können der Ladezustand, Überladung, Überentladung und die Funktionsfähigkeit, z. B. durch Auswertung der erfassten Messgrößen (d. h der erfassten Messwerte) als Parameter ermittelt werden. Hierzu kommt beispielsweise zumindest eine Überwachungsvorrichtung zum Einsatz, welche die Messwerterfassung durchführt und ggf. auch auswertet. Die Überwachungsvorrichtung kann dabei insbesondere ein Überwachungssystem sein, welches z. B. wenigstens zwei (ggf. autonome und/oder separat ausgebildete) Überwachungseinheiten, jeweils ggf. mit weiteren Sensoren umfasst. Die Überwachungseinheiten müssen dabei nicht zwangsläufig identisch oder ähnlich ausgebildet sein, wobei eine erste Überwachungseinheit z. B. unterschiedlich zu einer zweiten Überwachungseinheit konstruiert ist. Somit können die Überwachungseinheiten einen unterschiedlichen spezialisierten Funktionsumfang aufweisen, welcher dem jeweiligen Anwendungszweck angepasst ist.

Bevorzugt kann die Auswertung der durch die Überwachungsvorrichtung (d. h. auch ggf. durch die Überwachungseinheiten) überwachten Parameter bzw. erfassten Messgrößen auch durch eine Ansteuerungseinheit und/oder durch eine Auswerte-Steuerungseinheit erfolgen. Besonders bevorzugt können durch die Messwerterfassung anhand der Auswertung der Parameter kritische Zustände des Batteriesystems und/oder der einzelnen Zellen (d. h. die Energiespeicherzellen z. B. von jedem Zellpaket des Batteriesystems bzw. Energiespeichers), wie ein Überstrom, Überspannung, eine kritische Temperatur oder eine drohende Tiefenentladung erkannt und/oder Gegenmaßnahmen eingeleitet werden. Auf Grundlage der Messwerterfassung wird beispielsweise der Stromkreis ganz oder teilweise (z. B. auch nur der Verbraucherstrom oder die Energieversorgung des Batteriemanagementsystems) unterbrochen. Somit kann die Sicherheit bei einem Betrieb des Batteriesystems deutlich gesteigert werden.
Vorzugsweise kann bei einem Eintreten und/oder Vorliegen eines kritischen Zustands, d. h. beispielsweise dem Überschreiten und/oder Unterschreiten eines kritischen Temperaturschwellenwerts und/oder bei einem Überschreiten und/oder Unterschreiten eines kritischen Spannungs- und/oder Stromschwellenwertes (d. h. einer Grenzwertverletzung), der Stromkreis von dem Batteriesystem zum Verbraucher vollständig durch das Batteriemanagementsystem z. B. mittels zumindest einer Halbleiterschalteinheit und/oder einer Sicherheitsschalteinheit und/oder einer Überstromschutzeinrichtung unterbrochen werden. Die Schwellenwerte können somit einen oberen und einen unteren Schwellenwert aufweisen, wobei die Unterschreitung des unteren Schwellenwertes und die Überschreitung des oberen Schwellenwertes beide einen kritischen Zustand darstellen. Typischerweise kann der Schwellenwert für die Temperatur z. B. maximal -10 °C (Grad Celsius) oder 0 °C und der obere Schwellenwert z. B. mindestens 40 °C betragen. Somit können kritische Zustände effektiv erfasst und Schäden verhindert werden. Allerdings muss auch die Energieversorgung zum Batteriemanagementsystem stets gewährleistet sein, um die Messwerterfassung, Verarbeitung und Kommunikation stets zu ermöglichen. Daher erfolgt die Energieversorgung vorteilhafterweise durch den Energiespeicher.

Auch ist es denkbar, dass durch das Batteriemanagementsystem, insbesondere durch die Auswerte-Steuerungseinheit, der Zustand des Batteriesystems und/oder Energiespeichers ermittelt wird. Der Zustand ermöglicht es dabei beispielsweise, die Leistungsfähigkeit des Batteriesystems zu bestimmen Dabei können Parameter, insbesondere Messgrößen wie Temperatur und/oder Spannung und/oder Ladezustand und/oder weitere Parameter wie Alter des Energiespeichers, Zyklenzahl (Lade-Entlade-Zyklen), Spannungscharakteristik und Innenwiderstand herangezogen werden. Zur Auswertung und Speicherung dieser Daten weist das Batteriemanagementsystem beispielsweise einen mit der Auswerte-Steuerungseinheit verbundenen Datenspeicher auf. Dabei kann die Auswerte-Steuerungseinheit z. B. Algorithmen oder Auswerteverfahren nutzen und insbesondere elektronisch ausführen, um die Parameter zueinander in Beziehung zu setzen und den Zustand zu ermitteln.

Das Batteriemanagementsystem weist vorzugsweise auch ein Kommunikationssystem auf, z. B. ein Bussystem, welches zur (Daten-)kommunikation mit externen Geräten und/oder einer am Batteriesystem angeschlossenen Komponente genutzt wird. Das Bussystem weist insbesondere einen CAN-Bus und/oder SPI-Bus auf. Weiter kann das Batteriemanagementsystem eine Elektronik aufweisen, insbesondere die Auswerte-Steuerungseinheit, zumindest einen nicht-flüchtigen Datenspeicher und/oder Schnittstelleneinheiten (wie Datenschnittstellen), wobei die Auswerte-Steuerungseinheit und/oder die Schnittstelleneinheit z. B. als Mikrocontroller und/oder Mikroprozessor und/oder digitaler Signalprozessor und/oder integrierter Schaltkreis ausgebildet sind. Die Elektronik kann bevorzugt auf einer Platine des Batteriemanagementsystems angeordnet und/oder elektrisch miteinander verbunden sein. Auch kann vorgesehen sein, dass das Batteriemanagementsystem programmierbar ausgestaltet ist, und somit die Funktionalität variabel ergänzt und/oder modifiziert werden kann. Weiter ist auch die Kommunikation zu einer Displayeinheit denkbar, um z. B. Parameter und/oder den Zustand für einen Benutzer anzuzeigen. Zur Kommunikation, zum Auslesen des Datenspeichers und/oder zur Programmierung kann das Batteriemanagementsystem ferner Schnittstellen und/oder Verbindungen, insbesondere elektrisch leitende Steckverbindungen aufweisen. Der zumindest eine Datenspeicher kann dabei extern von der Auswerte-Steuerungseinheit angeordnet und/oder in der Auswerte-Steuerungseinheit integriert sein, und dabei z. B. als Flash-Speicher und/oder RAM (Random-Access Memory) und/oder SD-Speicher (Secure Digital Memory Card) oder dergleichen ausgebildet sein. Im Datenspeicher werden insbesondere die erfassten Parameter (ggf. als Protokoll und/oder mit Zeitstempeln) und/oder relevante Daten des Batteriesystems (auch Kenndaten und/oder Authentifizierungsinformationen) gespeichert. Die Kenndaten des Energiespeichers sind beispielsweise Zellenspannung, Temperaturempfindlichkeit, Zyklenlebensdauer, maximal erlaubter Lade- oder Entladestrom, welcher zur Überwachung und/oder Steuerung herangezogen und mit den Parametern bzw. erfassten Messwerten verglichen werden können (z. B. durch eine Auslesung des Datenspeichers durch die Auswerte-Steuerungseinheit). Auch ist es denkbar, dass das Batteriemanagementsystem eine Authentifizierungsfunktion z. B. zur Authentifizierung eines Benutzers aufweist, so dass die Nutzung des Batteriesystems nur bei erfolgreicher Authentifizierung gestattet wird. Auch kann das Batteriemanagementsystem zumindest eine Sicherheitseinheit aufweisen, welche den Betrieb des Batteriemanagementsystems überwacht und damit die Sicherheit weiter erhöht. Die Sicherheitseinheit und/oder das Batteriemanagementsystem können ferner unter Berücksichtigung eines Sicherheits-Integritätslevels (z. B. gemäß IEC 61508/IEC61511) konstruiert sein und/oder betrieben werden und entsprechende Anforderungsstufen erfüllen. Die Anforderungsstufen werden dabei auch nach SIL (Safety Integrity Level) Sicherheitsintegritätslevel klassifiziert. So weisen sicherheitskritische Komponenten des Batteriemanagementsystems, z. B. die Auswerte-Steuerungseinheit und/oder die Schalteinheiten und/oder die Überwachungsvorrichtung beispielsweise redundant ausgeführte Signalleitungen auf, um so die Sicherheitsanforderungen zu erfüllen.
Es kann vorgesehen sein, dass das Batteriemanagementsystem zur Steuerung des Batteriesystems eingesetzt wird. Unter Steuerung wird im Rahmen der Erfindung auch eine Regelung (mit einer Rückkopplung bzw. Rückführung in einer Regelstrecke) verstanden. Hierzu kann die Auswerte-Steuerungseinheit z. B. wenigstens einen Regler und/oder einen Laderegler (insbesondere ein Mikrocontroller mit Verbindung zur Überwachungsvorrichtung) zur Regelung (Steuerung) des Ladevorgangs aufweisen. So ist z. B. eine Limitierung und Steuerung von Lade- und Entladeströmen im Stromkreis des Energiespeichers möglich. Insbesondere weist das Batteriemanagementsystem zumindest ein Schalterelement, insbesondere Halbleiterschalter auf, um den Stromkreis zu schalten und/oder den Batteriestrom (insbesondere zu einer Komponente) zumindest in eine Richtung zu unterbinden. Durch die Ansteuerung des zumindest einen Schaltelementes kann beispielsweise auch die Einhaltung einer oberen und/oder unteren Spannungsgrenze und/oder einer oberen und/oder unteren Ladungsgrenze bewirkt werden, wobei hierzu bevorzugt die Zellspannungen durch die Überwachungsvorrichtung des Batteriemanagementsystems überwacht werden. Hierdurch entsteht insbesondere bei Lithium-Batterien ein deutlicher Vorteil, da diese nur in geringen Spannungsbereichen sicher betrieben werden können. Auch können ferner die ermittelten (d. h. gemessenen bzw. erfassten) Parameter ausgewertet und in Abhängigkeit von dieser Auswertung das zumindest eine Schaltelement angesteuert werden. Weiter ist es denkbar, dass in Abhängigkeit von den überwachten Parametern ein Kühlsystem des Batteriesystems durch das Batteriemanagementsystem angesteuert wird, insbesondere in Abhängigkeit von der Temperaturüberwachung. Weiter wird ggf. eine Steuerung des Lade- und Entladeprozesses, insbesondere auch für jede einzelne Zelle und/oder für das gesamte Batteriesystems bzw. den gesamten Energiespeicher, im Rahmen eines "Balancing" durch das Batteriemanagementsystem durchgeführt. Das Balancing ermöglicht beispielsweise eine Angleichung von ungleichen Ladungszuständen der einzelnen Zellen des Energiespeichers bzw. Batteriesystems. Hierzu erfolgt eine Auswertung der Überwachungsvorrichtung und/oder Steuerung der Schalteinheiten durch die Auswerte-Steuerungseinheit derart, dass eine Angleichung bewirkt wird. Die Überwachungsvorrichtung kann hierfür die Parameter für den Energiespeicher und/oder für die einzelnen Zellen des Energiespeichers erfassen. So können auch Parameter, wie die Kapazität des Energiespeichers und/oder der einzelnen Zellen, Betriebsdaten, Leckströme, die Ladungszustände (State of Charge, SOC) des Energiespeichers und/oder der einzelnen Zellen und/oder die Ruhespannung (Open Circuit Voltage, OCV) des Energiespeichers und/oder der einzelnen Zellen als Parameter erfasst werden. Somit kann die Lebensdauer und Leistung des Batteriesystems deutlich erhöht werden.

Die Schalteinheiten können beispielsweise als mechanische Schalter und/oder Taster und/oder Relais und/oder elektronische Schalter und/oder Halbleiterschalter und/oder dergleichen ausgebildet sein. Relais und/oder mechanische Schalter besitzen dabei den Vorteil, dass eine vollständige galvanische Trennung des Stromkreises erfolgen kann. Unter einer Halbleiterschalteinheit werden beispielsweise auch ein Halbleiterschalter, d. h. ein elektrisches Halbleiter-Bauelement, insbesondere ein Leistungshalbleiter und/oder ein MOSFET (metal oxide semiconductor field-effect transistor) und/oder Leistungs-MOSFET verstanden. Solche Halbleiterschalter zeichnen sich vorzugsweise dadurch aus, dass eine Unterbindung des Stromflusses nur für eine bestimmte Stromrichtung erfolgen kann. Dabei ist ggf. ein erster Halbleiterschalter im positiven Strompfad (Pluszweig) und ein zweiter Halbleiterschalter im negativen Strompfad (Minuszweig) des Stromkreises integriert. Hierdurch kann beispielsweise der Lade- und/oder Entladestrom gesteuert werden, wobei z. B. entweder nur der Lade- oder nur der Entladestrom zugelassen wird. Die Steuerung erfolgt bevorzugt in Abhängigkeit von der Parameter-Überwachung (z. B. einer Überwachung der Kapazität durch die Überwachungsvorrichtung). Der Leistungshalbleiter und/oder Leistungs-MOSFET ist dabei bevorzugt für das Schalten und Unterbinden (d. h. Sperren) großer Ströme und Spannung geeignet, insbesondere Stromstärken bis maximal 50 A (Ampere) und/oder 100 A und/oder 200 A und/oder 500 A und/oder 800 A und/oder Spannungen bis maximal 1000 V (Volt).

In einer weiteren Möglichkeit kann vorgesehen sein, dass die Sicherheitsschalteinheit als pyrotechnischer Schalter ausgebildet ist. Der pyrotechnische Schalter weist dabei nach der Aktivierung einen stabilen und irreversiblen Schaltzustand auf. In diesem Zusammenhang bezieht sich der Ausdruck "irreversibel" insbesondere darauf, dass nach dem Schalten bzw. Aktivieren der Sicherheitsschalteinheit die Funktionalität der Sicherheitsschalteinheit zum Schalten irreversibel zerstört ist, sodass ein erneutes Schließen des Stromkreises (des Energiespeichers) durch die Sicherheitsschalteinheit, insbesondere den pyrotechnischen Schalter unmöglich ist. Dabei ist der pyrotechnische Schalter bzw. die Sicherheitsschalteinheit vorzugsweise als Trennschalter ausgebildet, welcher/welche eine vollständige galvanische Trennung des Stromkreises ermöglicht. Zur Ansteuerung der Sicherheitsschalteinheit kann vorzugsweise eine Ansteuerungseinheit vorgesehen und elektrisch mit der Sicherheitsschalteinheit verbunden sein. Die Ansteuerungseinheit erzeugt dabei einen Energiestoß, insbesondere einen Zündstrom, welcher die Sicherheitsschalteinheit aktiviert. Der Energiestoß bewirkt dabei bspw. die Auslösung einer Sprengeinheit der insbesondere als pyrotechnischer Schalter ausgebildeten Sicherheitsschalteinheit, wodurch ein Bolzen durch einen perforierten Leiter getrieben wird. Der Leiter ist insbesondere ein elektrischer Leiter, welcher mit den Kontakten der Sicherheitsschalteinheit derart verbunden ist, dass er ein Bestandteil des Stromkreises des Energiespeichers ist. Durch die Auslösung der Sprengeinheit bzw. der Aktivierung der Sicherheitsschalteinheit wird daher der Stromfluss durch den Leiter unterbrochen, wodurch auch der Stromfluss des Stromkreises des Energiespeichers unterbunden und/oder der Stromkreis des Energiespeichers irreparabel unterbrochen wird. Zum erneuten Schließen des Stromkreises nach Aktivierung der Sicherheitsschalteinheit ist somit ein Austausch der Sicherheitsschalteinheit notwendig. Die Sicherheitsschalteinheit ist daher derart in den Stromkreis des Energiespeichers integriert, dass der Leiter bzw. die Kontakte der Sicherheitsschalteinheit einen Teil des Stromkreises bilden und diesen im deaktivierten Schaltzustand der Sicherheitsschalteinheit schließen und im aktivierten Schaltzustand öffnen. Hierbei ist der Vorteil, dass nur im Schaltfall zur Aktivierung eine elektrische Leistung zur Zündung aufgebracht werden muss. Im Normalbetrieb erfolgt daher keine und/oder nur eine geringe Leistungsaufnahme des pyrotechnischen Schalters. Die geringe Stromaufnahme wird somit dadurch gewährleistet, dass nur bei einer Aktivierung, also im Schaltfall, eine (wesentliche) elektrische Leistung zur Zündung aufgebracht werden muss. Der pyrotechnische Schalter ist kostengünstig und weist ferner eine hohe Strombelastbarkeit auf, da die Kontakte vor der Zündung form- und/oder stoffschlüssig verbunden sind.

Die Sicherheitsschalteinheit ist vorzugsweise dazu ausgelegt, eine maximale Spannung von 12 V und/oder 20 V und/oder 50 V und/oder 100 V und/oder 200 V und/oder 400 V (Gleichspannung) schalten. Nach einer Ansteuerung erfolgt die Unterbrechung des Stromkreises insbesondere innerhalb eines Zeitraum von maximal 100 µs und/oder 200 µs und/oder 5 ms und/oder 1 s. Der maximal zulässige schaltbare Strom beträgt z. B. maximal 100 A und/oder 200 A und/oder 300 A. Die Kontakte weisen bspw. Kupfer und/oder Zinn und/oder Nickel auf, wobei die Kontakte insbesondere mit Zinn, Nickel und/oder Gold beschichtet sein können. Der zum Energiestoß notwendige Strom zur Aktivierung, d. h. der Initiierungsstrom, beträgt z. B. maximal 1 A und/oder 2 A und/oder 10 A. Die Stromaufnahme im Normalbetrieb (Ruhestrom) beträgt z. B. maximal 1 A und/oder maximal 1 mA und/oder maximal 1 µA und/oder im Wesentlichen 0 A. Hierdurch wird eine besonders Energieeffiziente Ausgestaltung ermöglicht.

In einer weiteren Möglichkeit kann vorgesehen sein, dass die Halbleiterschalteinheit als Leistungshalbleiter und/oder Feldeffekttransistor, insbesondere als Leistungs-MOSFET, ausgebildet ist, wobei vorzugsweise eine erste Halbleiterschalteinheit und eine zweite Halbleiterschalteinheit vorgesehen sind. Die als Halbleiterschalter ausgebildete Halbleiterschalteinheit besitzt den Vorteil, dass nur eine geringe Energieaufnahme für den Betrieb und zum Schalten notwendig ist. Der Leistungshalbleiter besitzt dabei gleichzeitig eine sehr hohe Strombelastbarkeit, so dass auch die hohen Batterieströme, welche vom Batteriesystem zum Betrieb der Komponente bzw. Last geliefert werden, geschaltet werden können. Dabei ist es besonders günstig, die erste Halbleiterschalteinheit im positiven Strompfad und die zweite Halbleiterschalteinheit im negativen Strompfad des Batteriesystems (Energiespeichers) zu integrieren. Da die Halbleiterschalteinheiten den Stromfluss nur in eine Stromrichtung unterbinden, kann durch ein koordiniertes Ansteuern der zwei Halbleiterschalteinheiten der Stromfluss sehr flexibel gesteuert werden. Auch kann durch ein Aktivieren beider Halbleiterschalteinheiten der Stromfluss zuverlässig vollständig unterbunden werden. Hierzu können die Halbleiterschalteinheiten bevorzugt in einem Batteriemanagementsystem integriert sein.

Ein weiterer Vorteil im Rahmen der Erfindung ist erzielbar, wenn die Sicherheitsschalteinheit als stabiler und/oder bistabiler Schalter mit zumindest einem stabilen Schaltzustand, insbesondere als bistabiles Relais und/oder als elektrochemischer Schalter und/oder als mechanischer Schalter ausgebildet ist. Der elektrochemische Schalter besitzt hierbei insbesondere den Vorteil, dass (z. B. durch einen Energiestoß) mit nur sehr geringem Energieaufwand eine chemische Reaktion ausgelöst werden kann, welche den Schaltkreis unterbricht. Der bistabile Schalter und insbesondere das bistabile Relais kann dabei ebenfalls eine galvanische Trennung bewirken, wobei nach dem Schalten der bistabile Schalter bzw. das bistabile Relais (insbesondere irreversibel) im offenen Schaltzustand verharrt, d. h. der Schalter/das Relais wird irreversibel geschaltet. Hierbei ist bevorzugt das bistabile Relais bzw. der Schalter derart ausgebildet, dass die Energieaufnahme des Relais/Schalters im Normalbetrieb (deaktivierter Schaltzustand) und/oder im aktivierten Schaltzustand im Wesentlichen der Energieaufnahme des Halbleiterschalters entspricht und/oder unterhalb der Energieaufnahme des Halbleiterschalters liegt. Dazu kann der Schalter bzw. das Relais konstruktiv derart ausgebildet sein, dass nur eine geringe Stromaufnahme zum Betrieb notwendig ist. So kann bspw. die Stromtragfähigkeit der stromführenden Teile für den maximalen Kurzschlussstrom dimensioniert sein, so dass die stromführenden Teile des Schalters bzw. Relais mindestens einen hierzu ausreichenden Querschnitt aufweisen. Weiter können die Kontaktflächen des Schalters bzw. Relais derart ausgebildet sein, dass ein Abbrand der Kontakte durch einen Lichtbogen möglich ist, da lediglich ein einmaliger Betrieb (irreversibel) notwendig ist. Der Lichtbogen wird bei konventionellen Relais dagegen verhindert. Weiter kann vorgesehen sein, dass bei dem Schalter bzw. Relais eine Spule kurzzeitig überlastet wird, wenn es zur Aktivierung des Schalters bzw. Relais kommt. Hierdurch kann ein Schaltkontakt aufgrund des entstehenden Magnetfeldes öffnen und in eine mechanische Sicherung getrieben werden. Dabei kann vorgesehen sein, dass die mechanische Sicherung den Schaltkontakt auffängt und diesen in der Öffnungsstellung arretiert, derart, dass ein erneutes Schließen des Schalters bzw. Relais und somit des Stromkreises verhindert wird. Hierdurch kann ein zuverlässiges und energiesparendes Schalten zur Unterbindung des Stromflusses erfolgen.

Ein weiterer Vorteil im Rahmen der Erfindung ist erzielbar, wenn die Überwachungsvorrichtung mit der Halbleiterschalteinheit und/oder der Sicherheitsschalteinheit derart elektrisch verbunden ist, dass bei einem Überschreiten zumindest eines Grenzwertes des Parameters, insbesondere zumindest eines Spannungsgrenzwertes und/oder zumindest eines Temperaturgrenzwertes, die Halbleiterschalteinheit und/oder die Sicherheitsschalteinheit durch die Überwachungsvorrichtung ansteuerbar und/oder schaltbar (d. h. aktivierbar) sind. Weiter kann es auch vorgesehen sein, dass durch die Überwachungsvorrichtung sowohl bei einem Unterschreiten als auch bei einem Überschreiten von Grenzwerten der Parameter die Halbleiterschalteinheit und/oder die Sicherheitsschalteinheit schaltbar sind. So kann gewährleistet werden, dass bei einem Über- oder Unterschreiten von Temperaturgrenzwerten, bei einem Überstrom und/oder bei einer Überspannung der Stromkreis des Energiespeichers bzw. Batteriesystems unterbrochen wird, um eine Beschädigung des Batteriesystems zu verhindern. Hierbei ist es entscheidend, welche Parameter am Batteriesystem durch die Überwachungsvorrichtung und in welcher Weise erfasst werden. So kann es sinnvoll sein, dass sowohl analoge als auch digitale Messverfahren eingesetzt werden, um Messgrößen wie Spannung und/oder Strom und/oder Temperatur und/oder Beschleunigung zu überwachen. Die Spannung- und/oder Strom- und/oder Temperaturüberwachung umfasst dabei auch die Überwachung von Zellspannungen, Zellströmen und/oder der Zelltemperatur des Energiespeichers. Hierzu kann die Überwachung, z. B. durch Überwachungseinheiten, z. B. im Bereich der Zellen und/oder der Umgebung des Batteriesystems erfolgen.

Ein weiterer Vorteil im Rahmen der Erfindung ist erzielbar, wenn die Überwachungsvorrichtung zumindest eine Überwachungseinheit zur Überwachung von zumindest einem Parameter, insbesondere Spannung und/oder Temperatur, und zumindest eine Ansteuerungseinheit aufweist, wobei vorzugsweise eine erste Überwachungseinheit zur Aktivierung der Halbleiterschalteinheit mit einer ersten Ansteuerungseinheit elektrisch verbunden ist, und eine zweite Überwachungseinheit zur Aktivierung der Sicherheitsschalteinheit mit einer zweiten Ansteuerungseinheit elektrisch verbunden ist. Die Überwachungseinheiten können dabei bspw. elektrisch und/oder baulich autark voneinander ausgebildet sein. Dabei kann vorgesehen sein, dass die Halbleiterschalteinheit und/oder sämtliche Halbleiterschalteinheiten in Abhängigkeit von der Überwachung durch eine erste Überwachungseinheit aktiviert werden, wohingegen die Sicherheitsschalteinheit in Abhängigkeit von der Überwachung durch einer zweiten Überwachungseinheit aktiviert wird. Dies hat den Vorteil, dass nicht nur die Unterbindung des Stromflusses sondern auch die Überwachung der Parameter redundant erfolgt.

Ein weiterer Vorteil im Rahmen der Erfindung ist erzielbar, wenn die Sicherheitsvorrichtung in einem Stromkreis insbesondere mit dem Energiespeicher und einer externen Komponente verbunden / verbindbar ist, und insbesondere in einem Batteriemanagementsystem derart integriert / integrierbar ist, dass der Stromkreis durch die Halbleiterschalteinheit und/oder die Sicherheitsschalteinheit zur Unterbindung des Stromflusses, insbesondere eines Lade- und/oder Entladestromfluss unterbrechbar ist. Die Integration in dem Batteriemanagementsystem hat dabei den Vorteil, dass eine zentrale Komponente zur Überwachung und Steuerung des Batteriesystems bereitgestellt wird.

Vorteilhafterweise kann im Rahmen der Erfindung vorgesehen sein, dass durch die Halbleiterschalteinheit und/oder die Sicherheitsschalteinheit, insbesondere über elektrische Verbindungskontakte, eine externe Komponente mit dem Energiespeicher elektrisch verbindbar ist, vorzugsweise derart, dass ein Stromkreis zum Betrieb der Komponente und/oder zur Entladung und/oder Aufladung des Energiespeichers herstellbar ist. Die Verbindungskontakte können z. B. eine Beschichtung aufweisen, welche die Leitfähigkeit verbessert, wie bspw. Zinn und/oder Gold. Die Verbindungskontakte sind dabei insbesondere im Batteriemanagementsystem integriert. Erst bei einer Kontaktierung der Verbindungskontakte mit der Komponente und ggf. unter weiteren Voraussetzungen (wie z. B. dem Schließen des Hauptschalters des Batteriesystems) wird der Stromkreis geschlossen und kann z. B. durch die Halbleiterschalteinheit und/oder durch die Sicherheitsschalteinheit bei Vorliegen eines kritischen Zustands geöffnet werden.

Vorteilhafterweise kann im Rahmen der Erfindung vorgesehen sein, dass eine erste Halbleiterschalteinheit am Pluszweig und eine zweite Halbleiterschalteinheit am Minuszweig des Energiespeichers vorgesehen sind. Auf diese Weise kann durch die Ansteuerung der Halbleiterschalteinheiten der Pluszweig (d. h. der positive Stromzweig) und der Minuszweig (d. h. negative Strompfad) des Stromkreises separat geschaltet werden. Dies ermöglicht eine selektive Trennung, sodass z. B. nur der Ladestrom oder der Entladestrom zugelassen wird. In Abhängigkeit von der Überwachung ermöglicht dies eine intelligente Steuerung des Batteriesystems durch das Batteriemanagementsystem. Weiter ist es auch denkbar, dass beide Halbleiterschalteinheiten und/oder weitere Halbleiterschalteinheiten in einem gemeinsamen Pluszweig bzw. Minuszweig angeordnet sind.

Ebenfalls Gegenstand der Erfindung ist ein Verfahren zur Unterbindung eines elektrischen Stromflusses eines wiederaufladbaren elektrischen Energiespeichers, insbesondere einer Lithium-Ionen-Batterie und/oder eines Lithium-Ionen-Akkumulators, in Abhängigkeit von zumindest einem Parameter des Energiespeichers, mit einer Sicherheitsvorrichtung. Hierbei ist vorgesehen, dass die Sicherheitsvorrichtung zumindest eine Überwachungsvorrichtung zur Überwachung des zumindest einen Parameters, und zumindest eine Halbleiterschalteinheit zur primären reversiblen Unterbindung des Stromflusses, und zumindest eine Sicherheitsschalteinheit zur sekundären redundanten Unterbindung des Stromflusses aufweist, wobei die Halbleiterschalteinheit reversibel in Abhängigkeit von der Überwachung, und die Sicherheitsschalteinheit irreversibel in Abhängigkeit von der Überwachung geschaltet wird, wobei durch die irreversible Schaltung der Sicherheitsschalteinheit der Stromfluss des Energiespeichers irreversibel unterbunden wird. Damit bringt das erfindungsgemäße Verfahren die gleichen Vorteile mit sich, wie sie ausführlich mit Bezug auf eine erfindungsgemäße Sicherheitsvorrichtung beschreiben worden sind. Zudem kann eine erfindungsgemäße Sicherheitsvorrichtung gemäß dem erfindungsgemäßen Verfahren betrieben werden.

Das Schalten (d. h. Aktivieren) der Halbleiterschalteinheit und/oder der Sicherheitsschalteinheit in Abhängigkeit von Überwachung erfolgt dabei insbesondere derart, dass bei einem Eintreten eines kritischen Zustands des Batteriesystems, welcher durch die Überwachung erfasst wird, das Schalten bzw. Aktivieren erfolgt. Der kritische Zustand wird vorzugsweise dann detektiert, wenn die überwachten Parameter, d. h. insbesondere die erfassten Messgrößen bzw. Messwerte, einen unteren und/oder oberen Schwellenwert unter- und/oder überschreiten. Zur Überwachung der Parameter erfolgt dabei insbesondere durch eine Messung durch Überwachungseinheiten der Überwachungsvorrichtung am Batteriesystem. Die Überwachungsvorrichtung dient dabei vorzugsweise zur primären Aktivierung der Halbleiterschalteinheit und/oder sekundären Aktivierung der Sicherheitsschalteinheit in Abhängigkeit von der Überwachung und insbesondere von einer Spannung- und/oder Temperaturüberwachung am Energiespeicher. Dabei kann die Sicherheitsschalteinheit insbesondere ausschließlich irreversibel geschaltet werden.

Es ist dabei insbesondere denkbar, dass das Schalten der Halbleiterschalteinheit in Abhängigkeit von der Überwachung vorrangig zum Schalten der Sicherheitsschalteinheit in Abhängigkeit von der Überwachung erfolgt. Hierzu ist es denkbar, dass durch die Überwachung durch die Überwachungsvorrichtung ein primärer kritischer Zustand und ein sekundärer kritischer Zustand detektierbar sind. Zur Detektion des primären kritischen Zustands kann bspw. ein Primärgrenzwert (z. B. ein Primärspannungsgrenzwert und/oder ein Primärtemperaturgrenzwert) vorgesehen sein, wobei bei einem Überschreiten des Primärgrenzwertes die Halbleiterschalteinheit angesteuert und aktiviert wird. Zur Detektion des sekundären kritischen Zustands kann bspw. ein Sekundärgrenzwert (z. B. ein Sekundärspannungsgrenzwert und/oder ein Sekundärtemperaturgrenzwert) vorgesehen sein, wobei bei einem Überschreiten des Sekundärgrenzwertes die Sicherheitsschalteinheit angesteuert und aktiviert wird. Selbiges gilt selbstverständlich auch für weitere Parameter und auch für untere Grenzwerte, welche als sekundäre oder primäre Grenzwerte vorliegen können. Ein (oberer) Primärgrenzwert ist dabei vorzugsweise kleiner als ein (oberer) Sekundärgrenzwert, damit die Halbleiterschalteinheit vorrangig geschaltet wird. Dies hat den Vorteil, dass nach einer zuverlässigen Aktivierung des Halbleiterschalters nach dem Beheben des kritischen Zustands das Batteriesystem ohne weitere Maßnahmen weiterverwendet werden kann. Die Halbleiterschalteinheit schaltet reversibel und kann damit in den deaktivierten Schaltzustand zurückgeführt werden. Dagegen muss nach einem redundanten Aktivieren der Sicherheitsschalteinheit aufgrund der irreversiblen Unterbrechung des Stromkreises zunächst ein aufwändiger Austausch der Sicherheitsschalteinheit erfolgen. Die Aktivierung erfolgt daher nur redundant, falls die Halbleiterschalteinheit oder zumindest eine der Halbleiterschalteinheiten ausfällt. Um den Ausfall der Halbleiterschalteinheit zu erkennen, können ferner auch Überwachungseinheiten vorgesehen sein, welche den Zustand der Halbleiterschalteinheit überwachen.

Gemäß einem weiteren Vorteil kann vorgesehen sein, dass der Energiespeicher zumindest zwei Energiespeicherzellen aufweist, wobei die Überwachungsvorrichtung eine Spannungs- und/oder Temperaturüberwachung, und insbesondere auch eine Stromüberwachung, an zumindest einer und/oder jeder Energiespeicherzelle durchführt, und insbesondere die Halbleiterschalteinheit auch in Abhängigkeit von der Stromüberwachung geschaltet wird. Ebenfalls ist es denkbar, dass auch die Sicherheitsschalteinheit in Abhängigkeit von einer Stromüberwachung z. B. an einer Energiespeicherzelle aktiviert wird. Weiter kann auch eine Überstromschutzeinrichtung vorgesehen sein, welche bei einem Überstrom irreversibel den Stromkreis unterbricht. Anders als die Sicherheitsschalteinheit wird die Überstromschutzeinrichtung jedoch nicht aktiv angesteuert (sondern aktiviert sich z. B. autonom) und/oder kann nicht durch eine Überwachung weiterer Parameter, wie Spannung und/oder Temperatur aktiviert werden.

Gemäß einem weiteren Vorteil kann vorgesehen sein, dass die Überwachungsvorrichtung durch eine erste Überwachungseinheit eine primäre Abschaltbedingung ermittelt und durch eine zweite Überwachungseinheit eine sekundäre Abschaltbedingung ermittelt. Dabei liegt eine primäre Abschaltbedingung insbesondere dann vor, wenn ein primärer kritischer Zustand des Batteriesystems vorliegt und eine sekundäre Abschaltbedingung liegt insbesondere dann vor, wenn ein sekundärer kritischer Zustand des Batteriesystems vorliegt. Die Abschaltbedingungen können z. B. durch Auswertung der ermittelten Parameter bzw. Messwerte z. B. durch die Überwachungsvorrichtung und/oder durch eine Auswerte-Steuerungseinheit bestimmt werden. Dabei kann z. B. eine digitale Signalverarbeitung der Messwerte z. B. durch Auswerte-Steuerungseinheit erfolgen und/oder verschiedene Parameter miteinander in Beziehung gesetzt werden (z. B. durch anhand eines Models bzw. einer Modellierung des Batteriesystems). Auch ist es denkbar, dass zur Ermittlung der Abschaltbedingungen Daten, wie Kenndaten des Batteriesystems und/oder Grenzwerte herangezogen werden, welche z. B. in einem Datenspeicher nicht-flüchtig gespeichert sind. Die Auswerte-Steuerungseinheit und/oder die Überwachungsvorrichtung weist hierzu z. B. einen integrierten Schaltkreis und/oder einen Microcontroller auf, und ist insbesondere mit dem Datenspeicher, z. B. einem nicht-flüchtigen Datenspeicher und/oder einem Flash-Speicher, elektrisch verbunden. Weiter kann es vorgesehen sein, dass über Schnittstellen eine Kommunikation mit einem externen Gerät stattfindet, wobei über die insbesondere bidirektionale Kommunikation eine Übertragung der Daten erfolgt. Dies hat den Vorteil, dass flexibel und abhängig vom Anwendungszweck und des Typs des Energiespeichers Abschaltbedingungen ermittelt werden können.

Gemäß einem weiteren Vorteil kann vorgesehen sein, dass eine erste Ansteuerungseinheit die Halbleiterschalteinheit und/oder eine erste und/oder zweite Halbleiterschalteinheit ansteuert und/oder schaltet, wenn eine primäre Abschaltbedingung vorliegt, und eine zweite Ansteuerungseinheit die Sicherheitsschalteinheit ansteuert und/oder schaltet, wenn eine sekundäre Abschaltbedingung vorliegt. Die Ansteuerungseinheit kann bspw. elektrisch bzw. elektronisch mit elektrischen Komponenten, wie der Sicherheitsschalteinheit und/oder der Halbleiterschalteinheit und/oder der Auswerte-Steuerungseinheit und/oder dem Datenspeicher und/oder der Überwachungsvorrichtung und/oder den Überwachungseinheiten verbunden sein. Dabei ist es denkbar, dass die elektrischen Komponenten (die Elektronik) auf einer Platine des Batteriemanagementsystems angeordnet und zumindest teilweise elektrisch miteinander verbunden sind. Die erste Ansteuerungseinheit kann dabei unabhängig und/oder baulich getrennt von der zweiten Ansteuerungseinheit ausgebildet sein. So ist die erste Ansteuerungseinheit bspw. dazu ausgebildet, eine der Halbleiterschalteinheit angepassten Spannung zu erzeugen, um die Halbleiterschalteinheit zu aktivieren. Die zweite Ansteuerungseinheit ist bspw. derart ausgebildet, dass ein Initiierungsstrom bzw. ein Energiestoß erzeugt werden kann, welcher die Sicherheitsschalteinheit aktiviert. Somit wird eine zuverlässige Ansteuerung und damit ein sicherer Betrieb des Batteriesystems gewährleistet.

Ebenfalls Gegenstand der Erfindung ist ein Batteriesystem mit einem wiederaufladbaren elektrischen Energiespeicher, insbesondere einer Lithium-Ionen-Batterie, und einer erfindungsgemäßen Sicherheitsvorrichtung. Hierbei ist vorgesehen, dass das Batteriesystem insbesondere gemäß einem erfindungsgemäßen Verfahren betreibbar ist. Damit bringt das erfindungsgemäße Batteriesystem die gleichen Vorteile mit sich, wie sie ausführlich mit Bezug auf ein erfindungsgemäßes Verfahren und/oder eine erfindungsgemäße Sicherheitsvorrichtung erläutert worden sind.

In einer weiteren Möglichkeit kann vorgesehen sein, dass in dem Stromkreis, insbesondere Hauptstromkreis und/oder Verbraucherstromkreis, insbesondere über zumindest zwei Verbindungskontakte, zumindest eine Komponente insbesondere als Last mit dem Batteriesystems verbindbar und/oder betreibbar ist, und insbesondere durch die Halbleiterschalteinheit und die Sicherheitsschalteinheit in Abhängigkeit von der Überwachung der Batteriestrom zum Betrieb der Komponente und/oder ein Lade- und/oder Entladestrom des Batteriesystems schaltbar ist. Dabei können die Verbindungskontakte insbesondere als Endableitungen ausgebildet oder derart ausgebildet sein, dass eine Verbindung zu Endableitungen möglich ist. Die Verbindung zur Komponente erfolgt bspw. über eine Schraub- und/oder Clips- und/oder Steckverbindung. Hierdurch wird eine einfache und zuverlässige Inbetriebnahme des Batteriesystems an der Komponente ermöglicht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines erfindungsgemäßen Batteriesystems,
- Fig. 2: eine weitere schematische Darstellung des erfindungsgemäßen Batteriesystems,
- Fig. 3: eine perspektivische Draufsicht auf ein erfindungsgemäßes Batteriemanagementsystem,
- Fig. 4: eine schematische Darstellung einer erfindungsgemäßen Sicherheitsvorrichtung,
- Fig. 5: eine weitere schematische Darstellung der erfindungsgemäßen Sicherheitsvorrichtung,
- Fig. 6: eine schematische Darstellung einer Sicherheitsschalteinheit,
- Fig. 7: eine weitere schematische Darstellung einer Sicherheitsschalteinheit,
- Fig. 8: eine schematische Darstellung zur Visualisierung eines erfindungsgemäßen Verfahrens.

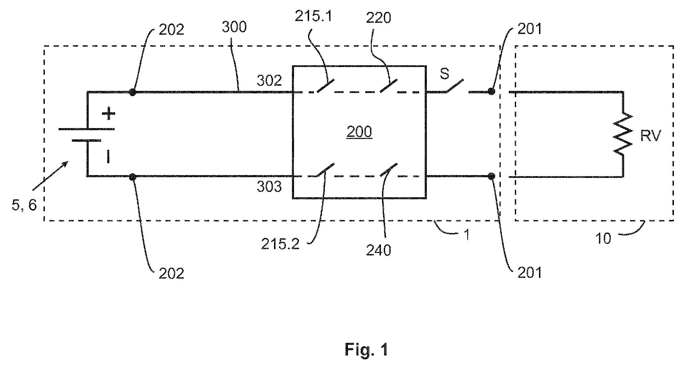

Figur 1 zeigt ein schematisches Schaltbild eines erfindungsgemäßen Batteriesystems 1, wobei ein Energiespeicher 5 sowie ein erfindungsgemäßes Batteriemanagementsystem 200 des Batteriesystems 1 dargestellt sind. Der Energiespeicher 5 kann dabei insbesondere als Lithium-Ionen-Batterie ausgebildet sein und weist vorzugsweise mehrere Energiespeicherzellen 6 (Batteriezellen) auf, welche z. B. parallel geschaltet zumindest ein Zellpaket 6 ergeben. Weiter ist auch eine aktive Komponente 10 dargestellt, welche z. B. als Last für das Batteriesystem 1 dient und/oder als Wechselrichter 10 ausgebildet sein kann. Die Komponente 10 dient ferner zur Verbindung des Batteriesystems 1 mit Verbrauchern, dargestellt durch einen Verbraucherwiderstand RV. Dabei kann die Komponente 10 in einem Stromkreis 300 mit dem Batteriesystem 1 derart verbunden werden, dass ein Stromfluss (elektrischer Ladungstransport) möglich ist und ein Batteriestrom bzw. Lade- und/oder Entladestrom fließt. Hierzu ist es z. B. notwendig, dass Anschlüsse der Komponente 10 mit elektrischen Verbindungskontakten 201 des Batteriesystems 1 verbunden werden. Weiter kann zur Inbetriebnahme des Batteriesystems 1 an der Komponente 10 vorausgesetzt werden, dass zumindest ein Hauptschalter S des Batteriesystems 1 z. B. manuell geschlossen wird. Der Hauptschalter S in der dargestellten Schaltung repräsentiert vorzugsweise einen oder mehrere manuell betätigbare elektrische Schalteinheiten, welche z. B. durch einen Benutzer des Batteriesystems 1 bedient werden. Auch kann es vorgesehen sein, dass neben dem Hauptschalter S noch ein Vorladeschalter vorgesehen ist, welcher vor der Inbetriebnahme durch den Hauptschalter S betätigt wird, um eine Vorladung einer Kapazität der Komponente 10 zu bewirken.

Es ist in Figur 1 ferner erkennbar, dass das Batteriesystem 1 aus Sicherheitsgründen ein erfindungsgemäßes Batteriemanagementsystem 200 aufweist, welches im Stromkreis 300 des Batteriesystems 1 (bzw. des Energiespeichers 5) integriert ist. Das Batteriemanagementsystem 200 umfasst mehrere schematisch dargestellte Schalteinheiten 215.1, 215.2, 220, 240, welche derart im Batteriesystem 1 angeordnet und/oder integriert sind, dass eine Unterbrechung des Stromkreises 300 und/oder eine Unterbindung eines Stromflusses im Stromkreis 300 zumindest in eine Richtung durchführbar ist. Bevorzugt ist dabei eine erste Halbleiterschalteinheit 215.1 im Pluszweig 302 (d. h. im positiven Strompfad 302 des Stromkreises 300) und eine zweite Halbleiterschalteinheit 215.2 im Minuszweig 303 (d. h. im negativen Strompfad 303 des Stromkreises 300) vorgesehen. Die Halbleiterschalteinheiten 215 sind dabei als elektronischer Schalter, bevorzugt als Feldeffekttransistoren, und besonders bevorzugt als MOSFETs ausgebildet, um bei einer Aktivierung bzw. einem Schalten den Stromfluss zumindest in eine Richtung zu unterbinden. Als redundante Schalteinheiten sind ferner eine Sicherheitsschalteinheit 220, insbesondere im Pluszweig 302, und/oder eine Überstromschutzeinrichtung 240, insbesondere im Minuszweig 303 vorgesehen. Anders als die Halbleiterschalteinheiten 215 dienen dabei die redundanten Schalteinheiten zur redundanten, irreversiblen und/oder vollständigen Trennung des Stromkreises 300, insbesondere durch eine vollständige galvanische Trennung. Auch ist es denkbar, dass das Batteriemanagementsystem 200 noch weitere Schalteinheiten aufweist, um z. B. die Sicherheit noch weiter zu erhöhen. Weiter sind noch zwei Kontakte 202 dargestellt, welche eine elektrische Verbindung des Batteriemanagementsystems 200 zu dem zumindest einen Energiespeicher 5 ermöglichen. Die in den Figuren gezeigten Schaltbilder sind dabei rein schematisch, so dass selbstverständlich auch eine veränderte Anordnung der Bauelemente denkbar ist.

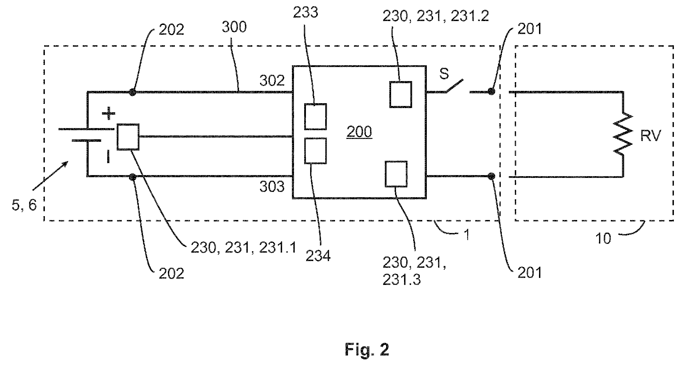

Figur 2 zeigt eine weitere schematische Darstellung des erfindungsgemäßen Batteriesystems 1, wobei weitere Komponenten des erfindungsgemäßen Batteriemanagementsystems 200 schematisch gezeigt sind. Neben den in Figur 2 nicht dargestellten Schalteinheiten 215.1, 215.2, 220, 240 umfasst das erfindungsgemäße Batteriemanagementsystem 200 zumindest eine Überwachungsvorrichtung 230, wobei beispielhaft die Anordnung von Überwachungseinheiten 231 am Batteriesystem 1 dargestellt ist. Die Überwachungseinheiten 231 und die Überwachungsvorrichtung 230 dienen zur Ermittlung von Parametern des Energiespeichers 5. Eine erste Überwachungseinheit 231.1 ist dabei im Bereich und/oder innerhalb des Energiespeichers 5 bzw. bei und/oder innerhalb der Energiespeicherzellen 6 angeordnet, um die Batterie und/oder die Zellen zu überwachen und so die Parameter des Energiespeichers 5 zu ermitteln (z. B. Temperatur und/oder Kapazität und/oder Spannung und/oder Strom oder dergleichen). Eine weitere zweite Überwachungseinheit 231.2 und eine dritte Überwachungseinheit 231.3 sind im Batteriemanagementsystem 200 integriert und dienen z. B. zur Überwachung des Stromkreises 300 (z. B. Strom und/oder Spannung) und/oder zur Überwachung der Temperatur oder dergleichen. Die Überwachungseinheiten 231 können dabei z. B. als Sensoren ausgebildet sein, und elektrisch z. B. mit einer zentralen Überwachungsvorrichtung 230 und/oder mit einer Auswerte-Steuerungseinheit 233 derart verbunden zu sein, dass die durch die Sensoren erfassten Messwerte und/oder elektrischen Signale von der Überwachungsvorrichtung 230 und/oder von der Auswerte-Steuerungseinheit 233 erfasst und/oder ausgewertet werden können, um so die Parameter zu ermitteln. Zusätzlich oder alternativ können die Überwachungseinheiten 231 auch autonom und/oder autark voneinander ausgebildet sein und genutzt werden. So kann bspw. vorgesehen sein, dass die Überwachungsvorrichtung 230 ein Überwachungssystem bildet, welches mehrere Überwachungseinheiten 231 umfasst. Die Überwachungseinheiten 231 können jeweils z. B. mit einer zentralen Auswerte-Steuerungseinheit 233 und/oder mit mehreren unabhängigen Auswerte-Steuerungseinheiten 233 verbunden sein. Die Auswerte-Steuerungseinheit 233 kann dabei die elektrischen Signale und/oder Messwerte von den Überwachungseinheiten 231 empfangen, auswerten, ggf. (zwischen-)speichern und so die Parameter ermitteln. Dabei ist die Auswerte-Steuerungseinheit 233 z. B. mit einem nicht-flüchtigen Datenspeicher 234 elektrisch / elektronisch verbunden.

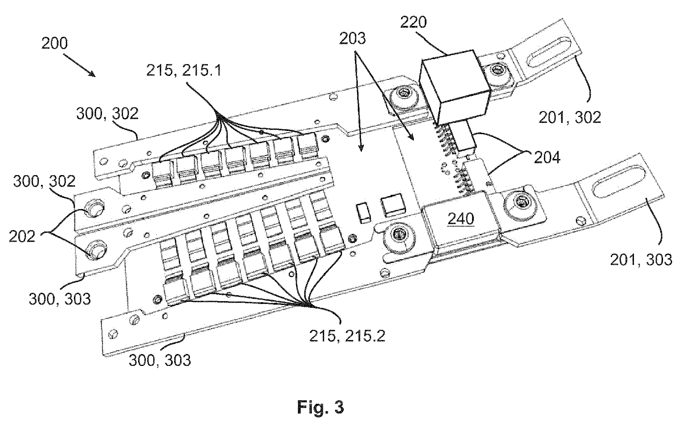

Figur 3 zeigt eine Draufsicht auf ein erfindungsgemäßes Batteriemanagementsystem 200, wobei insbesondere die Elektronik (d. h. die elektrischen Komponenten) des Batteriemanagementsystem 200 gezeigt werden. Die Elektronik ist dabei auf einer Platine 203 des Batteriemanagementsystems 200 angeordnet, wobei die Platine 203 z. B. von einem nicht dargestellten äußeren Gehäuse umgeben ist. Weiter sind Leitungsbahnen bzw. Stromschienen des Stromkreises 300 dargestellt, welcher das Batteriesystem 1 bzw. den Energiespeicher 5 mit der Komponente 10 verbindet. So ist ein positiver Strompfad 302 und ein negativer Strompfad 303 dargestellt, wobei die elektrischen Leitungen den Stromfluss des Batteriestroms und/oder des Lade- und/oder Entladestroms des Energiespeichers 5 ermöglichen. Um das Batteriesystem 1 mit dem Batteriemanagementsystem 200 zu verbinden, sind an den Leitungen Kontakte 202 vorgesehen, welche z. B. mittels einer Schraub- und/oder Steck- und/oder Clipsverbindung eine elektrische Verbindung bzw. Kontaktierung zum Energiespeicher 5 (bzw. der elektrischen Anschlüsse des Energiespeichers 5) ermöglichen. Der Stromfluss im Stromkreis 300 erfolgt dabei vom Energiespeicher 5 über die Kontakte 202 zunächst zu den Halbleiterschalteinheiten 215 und dann über die Halbleiterschalteinheiten 215 zu den redundanten Schalteinheiten 220, 240 und anschließend zu den Verbindungskontakten 201, welche elektrisch z. B. über Endableitungen mit der Komponente 10 verbunden werden. Auch ist es selbstverständlich möglich, dass der Stromfluss in Abhängigkeit von der Stromrichtung (z. B. bei einem Ladestrom) genau umgekehrt erfolgt. Entscheidend ist hierbei, dass die Halbleiterschalteinheiten 215 und/oder die redundanten Schalteinheiten 220, 240 den Stromfluss zumindest teilweise unterbinden können. Auch sind Schnittstellen 204 gezeigt, welche z. B. als Steckverbindungen ausgebildet sein können und eine Kommunikation mit externen Geräten ermöglichen. Hierzu sind die Schnittstellen 204 elektrisch mit der Elektronik des Batteriemanagementsystems 200 verbunden. Die Elektronik weist dabei bspw. zumindest eine elektrische Komponente, wie eine nicht explizit dargestellte Auswerte-Steuerungseinheit 233 und/oder (nicht-flüchtigen) Datenspeicher 234 und/oder Überwachungsvorrichtung 230 bzw. Überwachungseinheit 231 auf. Die elektrischen Komponenten können bspw. als integrierte Schaltkreise, Mikrocontroller und/oder Logik- bzw. Elektronikbausteine ausgebildet sein.

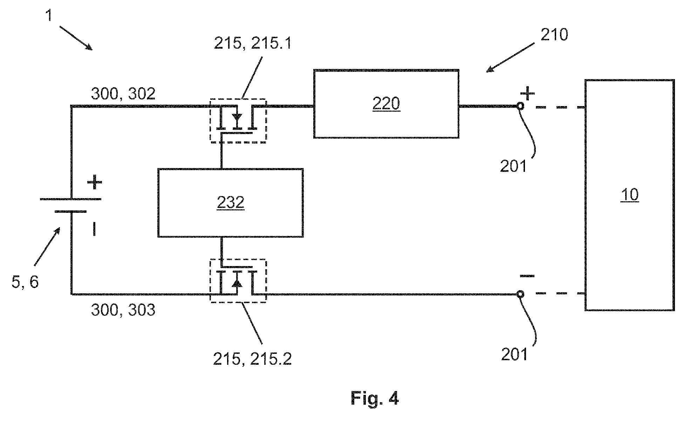

Figur 4 zeigt eine schematische Darstellung bzw. ein schematisches Schaltbild der erfindungsgemäßen Sicherheitsvorrichtung 210, welche bspw. Bestandteil eines Batteriemanagementsystems 200 sein kann. Die Sicherheitsvorrichtung 210 umfasst dabei eine Sicherheitsschalteinheit 220, welche bspw. als pyrotechnischer Schalter ausgebildet sein kann. Die Anordnung bzw. Integration der Sicherheitsschalteinheit 220 erfolgt dabei wahlweise im positiven Strompfad 302 oder im negativen Strompfad 303 (nicht dargestellt). Weiter sind im positiven Strompfad 302 und/oder im negativen Strompfad 303 (jeweils) eine Halbleiterschalteinheit 215 integriert. Sowohl eine erste Halbleiterschalteinheit 215.1 als auch eine zweite Halbleiterschalteinheit 215.2 sind dabei elektrisch mit einer Ansteuerungseinheit 232 verbunden. Für die Sicherheitsschalteinheit 220 ist eine separate Ansteuerungseinheit 232 vorgesehen, welche bspw. auch in der Sicherheitsschalteinheit 220 integriert sein kann. Die Ansteuerungseinheit 232 steuert dabei die Halbleiterschalteinheiten 215 bzw. die Sicherheitsschalteinheit 220 in Abhängigkeit von den überwachten Parametern an.

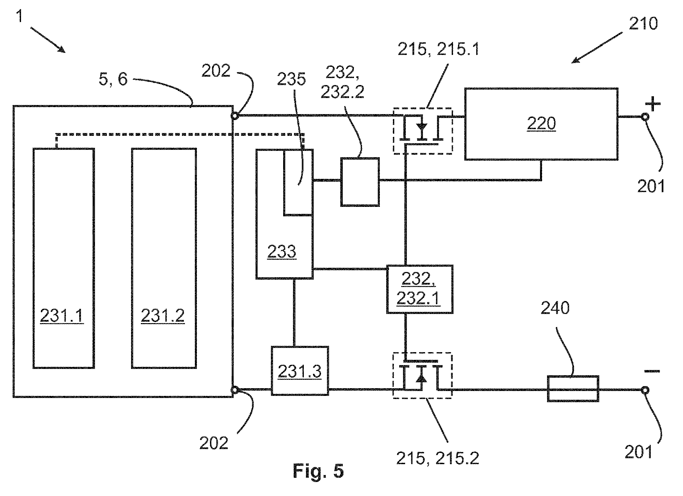

In Figur 5 ist eine weitere schematische Darstellung der erfindungsgemäßen Sicherheitsvorrichtung 210 gezeigt. Dabei ist eine Überwachungsvorrichtung 230 dargestellt, welche mehrere Überwachungseinheiten 231 umfasst. Eine erste Überwachungseinheit 231.1 und eine zweite Überwachungseinheit 231.2 sind dabei im Bereich des Energiespeichers 5 bzw. der Energiespeicherzellen 6 angeordnet und/oder in dem Energiespeicher 5 bzw. den Energiespeicherzellen 6 integriert. Weiter ist eine (elektrische) Verbindung der Überwachungseinheiten 231 mit einer Auswerte-Steuerungseinheit 233 bzw. mit einer Sicherheitseinheit 235 der Auswerte-Steuerungseinheit 233 vorgesehen. Die Sicherheitseinheit 235 ermöglicht dabei eine redundante Überwachung der Parameter, um die Zuverlässigkeit der Überwachung und des Abschaltmechanismus zur redundanten Aktivierung der Sicherheitsschalteinheit 220 zu gewährleisten. Die Auswerte-Steuerungseinheit 233 bzw. die Sicherheitseinheit 235 ist elektrisch mit einer weiteren zweiten Ansteuerungseinheit 232.2 verbunden, über die eine Aktivierung der Sicherheitsschalteinheit 220 möglich ist. Weiter ist die Auswerte-Steuerungseinheit 233 elektrisch mit einer ersten Ansteuerungseinheit 232.1 sowie einer dritten Überwachungseinheit 231.3 verbunden. Hierdurch ist eine primäre Ansteuerung der Halbleiterschalteinheiten 215 durchführbar, welche bei Vorliegen einer primären Abschaltbedingung aktiviert werden. Weiter kann durch diese Verbindung der Auswerte-Steuerungseinheit 233 mit der Überwachungsvorrichtung 230 und den Halbleiterschalteinheiten 215 eine selektive Ansteuerung erfolgen, welche z. B. die Stromrichtung beeinflusst. Wie ferner zu sehen ist, weist der Stromkreis 300 im negativen Strompfad 303 noch eine Überstromschutzeinrichtung 240 auf, welche allerdings nicht mit einer Ansteuerungseinheit 232 verbunden ist. Die Überstromschutzeinrichtung 240 ist bspw. als Schmelzsicherung ausgebildet und öffnet unabhängig von der Überwachung den Stromkreis 300 bei einem Überstrom. Daher ist es denkbar, dass die Sicherheitsschalteinheit 220 z. B. ausschließlich nur noch bei einer Überspannung und/oder einer Übertemperatur angesteuert werden braucht.

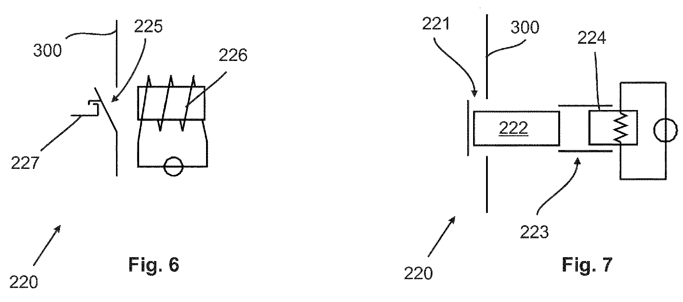

In Figur 6 ist ein Aufbau einer Sicherheitsschalteinheit 220 einer erfindungsgemäßen Sicherheitsvorrichtung 210 gemäß einem ersten Ausführungsbeispiel gezeigt. Dabei ist die Sicherheitsschalteinheit 220 als ein spezialisiertes bistabiles Relais zur irreversiblen Aktivierung und Öffnung des Stromkreises 300 ausgebildet. Somit ist es möglich, dass der Betrieb und die Aktivierung der Sicherheitsschalteinheit 220 besonders stromsparend erfolgt. Die Sicherheitsschalteinheit 220 weist hierzu Kontakte 225 auf, welche nur für einen einzigen Schaltvorgang ausgelegt sind. Hierbei können die Kontaktflächen der Kontakte 225 derart in Bezug auf ihre Oberflächengröße ausgestaltet sein, dass ein Lichtbogen bei einem Aktivieren der Sicherheitsschalteinheit 220 auftreten kann. Weiter ist eine Spule 226 vorgesehen, welche bei Aktivierung der Sicherheitsschalteinheit 220 ein hinreichendes Magnetfeld erzeugt, um den Schaltkontakt in eine mechanische Sicherung der Sicherheitsschalteinheit 220 zu treiben. Anschließend erfolgt eine Arretierung des Schaltkontakts durch die mechanische Sicherung, insbesondere ein mechanisches Schloss 227.

Figur 7 zeigt ein weiteres Ausführungsbeispiel einer Sicherheitsschalteinheit 220 einer erfindungsgemäßen Sicherheitsvorrichtung 210. Die als pyrotechnischer Schalter ausgebildete Sicherheitsschalteinheit 220 weist dabei einen Öffner 221 auf, welcher insbesondere perforiert ausgestaltet ist. Der Öffner 221 ist dabei insbesondere Teil der elektrischen Leitungen des Stromkreises 300, und führt somit bei einer Öffnung zur Unterbrechung (d. h. galvanische Trennung) des Stromkreises 300. Wird nun die Sicherheitsschalteinheit 220 aktiviert, so löst ein Zündstrom (d. h. z. B. ein Energiestoß durch die Ansteuerungseinheit 232) eine Sprengeinheit mittels eines Zünders 224 in einem Sprengraum 223 aus, wodurch ein Bolzen 222 durch den Öffner (perforierten Leiter) 221 getrieben wird. Hierdurch wird der Stromkreis 300 irreversibel galvanisch getrennt. Die Kontakte der Sicherheitsschalteinheit 220 können dabei derart in Bezug auf ihre Größe dimensioniert werden, dass ein ausreichender Strom schaltbar ist.

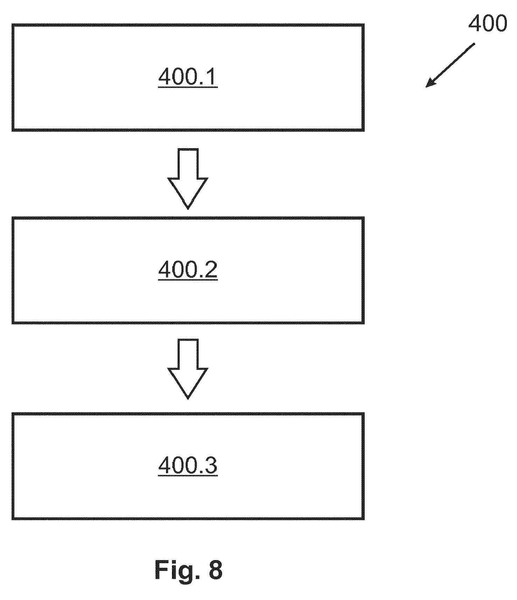

In Figur 8 ist ein erfindungsgemäßes Verfahren 400 schematisch visualisiert, wobei gemäß einem ersten Verfahrensschritt 400.1 eine Überwachung von Parametern eines erfindungsgemäßen Batteriesystems 1 bzw. eines Energiespeichers 5 erfolgt. Gemäß einem zweiten Verfahrensschritt 400.2 wird bei einer primären Abschaltbedingung in Abhängigkeit von der Überwachung eine Halbleiterschalteinheit 215 zur Unterbindung des Stromflusses des Energiespeichers 5 aktiviert. Gemäß einem dritten Verfahrensschritt 400.3 wird bei einer sekundären Abschaltbedingung in Abhängigkeit von der Überwachung eine Sicherheitsschalteinheit 220 irreversibel aktiviert.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Batteriesystem
- 5: Energiespeicher, Lithium-Ionen-Akkumulator
- 6: Energiespeicherzelle, Zellpaket
- 10: Komponente, Wechselrichter

- 200: Batteriemanagementsystem
- 201: elektrische Verbindungskontakte zu 10
- 202: Kontakte
- 203: Platine
- 204: Schnittstellen

- 210: Sicherheitsvorrichtung

- 215: Halbleiterschalteinheit
- 215.1: Erste Halbleiterschalteinheit
- 215.2: Zweite Halbleiterschalteinheit

- 220: Sicherheitsschalteinheit
- 221: Öffner
- 222: Bolzen
- 223: Sprengraum
- 224: Zünder
- 225: Kontakte
- 226: Spule
- 227: Mechanisches Schloss

- 230: Überwachungsvorrichtung
- 231: Überwachungseinheit
- 231.1: Erste Überwachungseinheit
- 231.2: Zweite Überwachungseinheit

- 231.3: Dritte Überwachungseinheit

- 232: Ansteuerungseinheit
- 232.1: Erste Ansteuerungseinheit
- 232.2: Zweite Ansteuerungseinheit
- 233: Auswerte-Steuerungseinheit
- 234: Datenspeicher
- 235: Sicherheitseinheit

- 240: Überstromschutzeinrichtung

- 300: Stromkreis
- 302: Pluszweig, positiver Strompfad
- 303: Minuszweig, negativer Strompfad

- 400: Verfahren
- 400.1: Erster Verfahrensschritt
- 400.2: Zweiter Verfahrensschritt
- 400.3: Dritter Verfahrensschritt

- S: Schalteinheit

- RV: Verbraucherwiderstand

## Patentansprüche

1. Sicherheitsvorrichtung (210) für einen wiederaufladbaren elektrischen Energiespeicher (5), insbesondere eine Lithium-Ionen-Batterie (5), zur Unterbindung eines elektrischen Stromflusses des Energiespeichers (5) in Abhängigkeit von zumindest einem Parameter des Energiespeichers (5), aufweisend
zumindest eine Überwachungsvorrichtung (230) zur Überwachung des zumindest einen Parameters und
zumindest eine Halbleiterschalteinheit (215) zur primären reversiblen Unterbindung des Stromflusses in Abhängigkeit von der Überwachung, und
zumindest eine Sicherheitsschalteinheit (220) zur sekundären redundanten Unterbindung des Stromflusses in Abhängigkeit von der Überwachung, wobei
die Sicherheitsschalteinheit (220) irreversibel zur Unterbindung des Stromflusses schaltbar ist.

2. Sicherheitsvorrichtung (210) nach Anspruch 1,
**dadurch gekennzeichnet,**
**dass** die Sicherheitsschalteinheit (220) als pyrotechnischer Schalter (220) ausgebildet ist.

3. Sicherheitsvorrichtung (210) nach Anspruch 1 oder 2,
**dadurch gekennzeichnet,**
**dass** die Halbleiterschalteinheit (215) als Leistungshalbleiter (215), insbesondere als Leistungs-MOSFET (215), ausgebildet ist, wobei vorzugsweise eine erste Halbleiterschalteinheit (215.1) und eine zweite Halbleiterschalteinheit (215.2) vorgesehen sind.

4. Sicherheitsvorrichtung (210) nach einem der vorhergehenden Ansprüche,
**dadurch gekennzeichnet,**
**dass** die Sicherheitsschalteinheit (220) als stabiler und/oder bistabiler Schalter (220) mit zumindest einem stabilen Schaltzustand, insbesondere als bistabiles Relais (220) und/oder als elektrochemischer Schalter (220) und/oder als mechanischer Schalter (220) ausgebildet ist.

5. Sicherheitsvorrichtung (210) nach einem der vorhergehenden Ansprüche,
**dadurch gekennzeichnet,**
**dass** die Überwachungsvorrichtung (230) mit der Halbleiterschalteinheit (215) und/oder der Sicherheitsschalteinheit (220) derart elektrisch verbunden ist, dass bei einem Überschreiten zumindest eines Grenzwertes des Parameters, insbesondere zumindest eines Spannungsgrenzwertes und/oder zumindest eines Temperaturgrenzwertes, die Halbleiterschalteinheit (215) und/oder die Sicherheitsschalteinheit (220) durch die Überwachungsvorrichtung (230) schaltbar sind.

6. Sicherheitsvorrichtung (210) nach einem der vorhergehenden Ansprüche,
**dadurch gekennzeichnet,**
**dass** die Überwachungsvorrichtung (230) zumindest eine Überwachungseinheit (231) zur Überwachung des zumindest einen Parameters, insbesondere Spannung und/oder Temperatur, und zumindest eine Ansteuerungseinheit (232) aufweist, wobei vorzugsweise eine erste Überwachungseinheit (231.1) zur Aktivierung der Halbleiterschalteinheit (215) mit einer ersten Ansteuerungseinheit (232.1) elektrisch verbunden ist, und eine zweite Überwachungseinheit (231.2) zur Aktivierung der Sicherheitsschalteinheit (220) mit einer zweiten Ansteuerungseinheit (232.2) elektrisch verbunden ist.

7. Sicherheitsvorrichtung (210) nach einem der vorhergehenden Ansprüche,
**dadurch gekennzeichnet,**
**dass** die Sicherheitsvorrichtung (210) in einem Stromkreis (300) des Energiespeichers (5), insbesondere mit dem Energiespeicher (5) und einer externen Komponente (10) elektrisch verbindbar ist, und insbesondere in einem Batteriemanagementsystem (200) derart integrierbar ist, dass der Stromkreis (300) durch die Halbleiterschalteinheit (215) und/oder die Sicherheitsschalteinheit (220) zur Unterbindung des Stromflusses, insbesondere eines Lade- und/oder Entladestromfluss, unterbrechbar ist.

8. Sicherheitsvorrichtung (210) nach einem der vorhergehenden Ansprüche,
**dadurch gekennzeichnet,**
**dass** durch die Halbleiterschalteinheit (215) und/oder die Sicherheitsschalteinheit (220), insbesondere über elektrische Verbindungskontakte (201), eine externe Komponente (10) mit dem Energiespeicher (5) elektrisch verbindbar ist, vorzugsweise derart, dass ein Stromkreis (300) zum Betrieb der Komponente (10) und/oder zur Entladung und/oder Aufladung des Energiespeichers (5) herstellbar ist.

9. Sicherheitsvorrichtung (210) nach einem der vorhergehenden Ansprüche,
**dadurch gekennzeichnet,**
**dass** eine erste Halbleiterschalteinheit (215.1) am Pluszweig (302) und eine zweite Halbleiterschalteinheit (215.2) am Minuszweig (303) des Energiespeichers (5) vorgesehen sind.

10. Verfahren (400) zur Unterbindung eines elektrischen Stromflusses eines wiederaufladbaren elektrischen Energiespeichers (5), insbesondere einer Lithium-Ionen-Batterie (5), in Abhängigkeit von zumindest einem Parameter des Energiespeichers (5), mit einer Sicherheitsvorrichtung (210), wobei die Sicherheitsvorrichtung (210) zumindest eine Überwachungsvorrichtung (230) zur Überwachung des zumindest einen Parameters, und
zumindest eine Halbleiterschalteinheit (215) zur primären reversiblen Unterbindung des Stromflusses, und
zumindest eine Sicherheitsschalteinheit (220) zur sekundären redundanten Unterbindung des Stromflusses aufweist, wobei
die Halbleiterschalteinheit (215) reversibel in Abhängigkeit von der Überwachung, und die Sicherheitsschalteinheit (220) irreversibel in Abhängigkeit von der Überwachung geschaltet wird, wodurch der Stromfluss des Energiespeichers (5) irreversibel unterbunden wird.

11. Verfahren (400) nach Anspruch 10,
**dadurch gekennzeichnet,**
**dass** der Energiespeicher (5) zumindest zwei Energiespeicherzellen (6) aufweist, wobei die Überwachungsvorrichtung (230) eine Spannungs- und/oder Temperaturüberwachung, und insbesondere auch eine Stromüberwachung, an zumindest einer Energiespeicherzelle (6) durchführt, und insbesondere die Halbleiterschalteinheit (215) auch in Abhängigkeit von der Stromüberwachung geschaltet wird.

12. Verfahren (400) nach Anspruch 10 oder 11,
**dadurch gekennzeichnet,**
**dass** die Überwachungsvorrichtung (230) durch eine erste Überwachungseinheit (231.1) eine primäre Abschaltbedingung ermittelt und durch eine zweite Überwachungseinheit (231.2) eine sekundäre Abschaltbedingung ermittelt.

13. Verfahren (400) nach einem der Ansprüche 10 bis 12,
**dadurch gekennzeichnet,**
**dass** eine erste Ansteuerungseinheit (232.1) die Halbleiterschalteinheit (215) und/oder eine erste und/oder zweite Halbleiterschalteinheit (215.1, 215.2) ansteuert und/oder schaltet, wenn eine primäre Abschaltbedingung vorliegt, und eine zweite Ansteuerungseinheit (232.2) die Sicherheitsschalteinheit (220) ansteuert und/oder schaltet, wenn eine sekundäre Abschaltbedingung vorliegt.

14. Verfahren (400) nach einem der Ansprüche 10 bis 13,
**dadurch gekennzeichnet,**
**dass** eine Sicherheitsvorrichtung (210) nach einem der Ansprüche 1 bis 9 Verwendung findet.

15. Batteriesystem (1) mit einem wiederaufladbaren elektrischen Energiespeicher (5), insbesondere einer Lithium-Ionen-Batterie (5), und einer Sicherheitsvorrichtung (210) nach einem der Ansprüche 1 bis 9, wobei das Batteriesystem (1) insbesondere gemäß einem Verfahren (400) nach einem der Ansprüche 10 bis 14 betreibbar ist.

16. Batteriesystem (1) nach Anspruch 15,
**dadurch gekennzeichnet,**
**dass** in einem Stromkreis (300), insbesondere über zumindest zwei Verbindungskontakte (201), zumindest eine Komponente (10) insbesondere als Last mit dem Batteriesystem (1) verbindbar und/oder betreibbar ist, und insbesondere durch die Halbleiterschalteinheit (215) und die Sicherheitsschalteinheit (220) in Abhängigkeit von der Überwachung ein Batteriestrom zum Betrieb der Komponente (10) und/oder ein Lade- und/oder Entladestrom des Batteriesystems (1) schaltbar ist.
